# EUROPEAN PATENT APPLICATION

(11) **EP 4 542 670 A1**
(43) Date of publication of application: **23.04.2025**
(21) Application number: 24179775.2
(22) Date of filing: 04.06.2024
(51) Int. Cl.: H01M 4/131, H01M 4/134, H01M 4/136, H01M 4/36, H01M 4/587, H01M 4/62, H01M 4/66, H01M 10/0525, H01M 10/0562

(54) **ALL-SOLID SECONDARY BATTERY**

(30) Priority: 18.10.2023 KR 20230139874
(71) Applicant: Samsung SDI Co., Ltd., Yongin-si, Gyeonggi-do 17084 (KR)
(72) Inventor: Son, Inhyuk, 17084 Yongin-si, Gyeonggi-do (KR); Jo, Sungnim, 17084 Yongin-si, Gyeonggi-do (KR); Shim, Kyueun, 17084 Yongin-si, Gyeonggi-do (KR); Lim, Hyungsub, 17084 Yongin-si, Gyeonggi-do (KR); Park, Taehyun, 17084 Yongin-si, Gyeonggi-do (KR); Lee, Jieun, 17084 Yongin-si, Gyeonggi-do (KR)
(74) Representative: Michalski Hüttermann & Partner Patentanwälte mbB

(57) **Abstract**

An all-solid secondary battery including a cathode layer, an anode layer, and an electrolyte layer between the cathode layer and the anode layer, wherein the cathode layer includes a cathode current collector and a cathode active material layer on one surface of the cathode current collector, the anode layer includes an anode current collector and a first anode active material layer on one surface of the anode current collector, the first anode active material layer includes a composite anode active material, the composite anode active material includes a first metal oxide represented by MₐO_{b} (0<a≤3 and 0<b<4, wherein if a is 1, 2, or 3, b is not an integer) and a carbon-based material, the first metal oxide is within a matrix of the carbon-based material, and M is one or more metals selected from metals in Groups 2 to 12 and 14 to 16.

## Description

### CROSS-REFERENCE TO RELATED APPLICATION

The present application claims priority to and the benefit of Korean Patent Application No. 10-2023-0139874, filed on October 18, 2023, in the Korean Intellectual Property Office, the entire content of which is incorporated herein by reference in its entirety.

### BACKGROUND

### 1. Field

Embodiments of the present disclosure described herein are related to an all-solid secondary battery.

### 2. Description of the Related Art

In line with recent requirements and/or desires in the industry, batteries with relatively high energy density and stability are actively being developed. For example, lithium batteries are utilized for one or more suitable purposes in information devices, communication devices, vehicles (e.g., electrical vehicles, automobiles, cars and/or the like). In vehicles, safety may be emphasized as it may impact human wellbeing.

Lithium batteries employing liquid electrolytes may be relatively more susceptible to fires and/or explosions due to short circuits. All-solid secondary batteries, which employ solid electrolytes instead of liquid electrolytes, have been proposed. Compared to liquid electrolytes, solid electrolytes may be relatively less likely to cause fires.

Therefore, by employing solid electrolytes instead of liquid electrolytes, an all-solid secondary battery may have a reduced risk of fire or explosion. An all-solid battery may provide improved safety.

### SUMMARY

Aspects according to one or more embodiments are directed toward an all-solid secondary battery which, by including a novel composite anode active material, has suppressed or reduced volume changes during charging and discharging and has improved cycling performance.

Additional aspects will be set forth in part in the description which follows and, in part, will be apparent from the description, or may be learned by practice of the presented embodiments of the present disclosure.

According to one or more embodiments, an all-solid secondary battery includes
a cathode layer, an anode layer, and a solid electrolyte layer between the cathode layer and the anode layer,
wherein the cathode layer includes a cathode current collector and a cathode active material layer on at least one surface (e.g., one or both (e.g., opposite) surfaces) of the cathode current collector,
the anode layer includes an anode current collector and a first anode active material layer on at least one surface (e.g., one or both (e.g., opposite) surfaces) of the anode current collector,
the first anode active material layer includes a composite anode active material, and
the composite anode active material includes a first metal oxide represented by MₐO_{b} (0<a≤3 and 0<b<4, wherein if (e.g., when) a is 1, 2, or 3, b is not an integer); and a carbon-based material,
wherein the first metal oxide is disposed within a matrix of the carbon-based material, and M is one or more metals selected from among metals in Groups 2 to 12, and Groups 14 to 16 of the Periodic Table of the Elements.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a cross-sectional view of an all-solid secondary battery according to embodiments;
FIG. 2 is a cross-sectional view of an all-solid secondary battery according to embodiments;
FIG. 3 is a cross-sectional view of an all-solid secondary battery according to embodiments;
FIG. 4 is a cross-sectional view of an all-solid secondary battery according to embodiments;
FIG. 5 is a cross-sectional view of an all-solid secondary battery according to embodiments;
FIG. 6 is a cross-sectional view of an all-solid secondary battery according to embodiments;
FIG. 7 is a cross-sectional view of an all-solid secondary battery according to embodiments;
FIG. 8 is a cross-sectional view of an all-solid secondary battery according to embodiments;
FIG. 9 is a cross-sectional view of an all-solid secondary battery according to embodiments;
FIG. 10 is a cross-sectional view of an all-solid secondary battery according to embodiments;
FIG. 11 is a cross-sectional view of an all-solid secondary battery according to embodiments; and
FIG. 12 is a cross-sectional view of an all-solid secondary battery according to embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described herein, by referring to the drawings, to explain aspects of the present description. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Unless otherwise defined, all terms (including technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the specification and the relevant art and should not be interpreted in an idealized sense or an overly formal sense unless expressly so defined herein.

Embodiments are described herein with reference to cross section illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

These present disclosures may, however, be embodied in many different forms and should not be construed as limited to the example embodiments set forth herein. Rather, these example embodiments are provided so that this disclosure will be thorough and complete, and will fully convey the scope of the present disclosure to those skilled in the art. In the drawings, like numbers refer to like elements throughout, and duplicative descriptions thereof may not be provided.

It will also be understood that when an element is referred to as being "on" or "over" another element, it can be directly on the other element or intervening elements may also be present. In contrast, when an element is referred to as being "directly on" or "directly over" another element, there are no intervening elements present.

It will be understood that, although the terms first, second, third, etc. may be utilized herein to describe one or more suitable elements, components, regions, layers, and/or sections, these elements, components, regions, layers, and/or sections should not be limited by these terms. These terms are only utilized to distinguish one element, component, region, layer, or section, from another element, component, region, layer, or section. For example, a first element, component, region, layer, or section could be termed a second element, component, region, layer, or section, without departing from the teachings of the present disclosure.

The terminology utilized herein is for the purpose of describing particular embodiments only and is not intended to be limiting of the present disclosure. As utilized herein, the singular forms "a", "an" and "the" are intended to include the plural forms as well including "at least one", unless the context clearly indicates otherwise. The term "at least one" should not be interpreted as being limited to a singular form. As utilized herein, the term "and/or" includes any and all combinations of one or more of the associated listed items. It will be further understood that the terms "comprises" and/or "comprising," or "includes" and/or "including" when utilized in this specification, specify the presence of stated features, regions, integers, steps, operations, elements, and/or components, but do not preclude the presence or addition of one or more other features, regions, integers, steps, operations, elements, components, and/or groups thereof. Further, the utilization of "may" when describing embodiments of the present disclosure refers to "one or more embodiments of the present disclosure".

Furthermore, spatially relative terms, such as "lower", "bottom", or "below" and "upper", "top", or "above" may be utilized herein to conveniently describe one element or feature's relationship to another element or feature. It will be understood that spatially relative terms are intended to encompass different orientations of the device while the device is in utilize or operated, in addition to the orientation depicted in the drawings. For example, if (e.g., when) the device in one of the drawings is turned over, elements described as being on the "lower" or "bottom" side of other elements would then be oriented on "upper" or "top" sides of the other elements. Therefore, example term "lower" can therefore, encompasses both (e.g., simultaneously) an orientation of "lower" and "upper". The device may be placed in other orientations (may be rotated by 90 degrees or in a different direction), and spatially relative terms utilized herein may be interpreted accordingly.

"Group" refers to a group in the Periodic Table of Elements of the Elements according to the 1-18 Group numbering system by the International Union of Pure and Applied Chemistry ("IUPAC").

The term "particle diameter" as utilized herein refers to an average particle diameter if (e.g., when) the particle is spherical, and refers to an average major axis length if (e.g., when) the particle is non-spherical. The particle diameter may be measured utilizing a particle size analyzer (PSA). The term "particle diameter" as utilized herein refers to, for example, an average particle diameter. The term "average particle diameter" as utilized herein refers to, for example, a median particle diameter (D50).

D50 may refer to a particle size corresponding to a cumulative 50 vol% as calculated from the side of particles with the smallest particle size in a particle size distribution as measured by a laser diffraction method.

D90 may refer to a particle size corresponding to a cumulative 90 vol% as calculated from the side of particles with the smallest particle size in a particle size distribution as measured by a laser diffraction method.

D10 may refer to a particle size corresponding to a cumulative 10 vol% as calculated from the side of particles with the smallest particle size in a particle size distribution as measured by a laser diffraction method.

As utilized herein, the term "metal" refers to both (e.g., simultaneously) metals and metalloids such as silicon and germanium, in an elemental or ionic state.

As utilized herein, the term "alloy" refers to a mixture of two or more metals.

As utilized herein, the term "electrode active material" refers to an electrode material capable of undergoing lithiation and delithiation.

As utilized herein, the term "cathode active material" refers to a cathode material capable of undergoing lithiation and delithiation.

As utilized herein, the term "anode active material" refers to an anode material capable of undergoing lithiation and delithiation.

As utilized herein, the terms "lithiation" and "to lithiate" refer to a process of adding lithium to an electrode active material.

As utilized herein, the terms "delithiation" and "to delithiate" refer to a process of removing lithium from an electrode active material.

As utilized herein, the terms "charging" and "to charge" refer to a process of providing electrochemical energy to a battery.

As utilized herein, the terms "discharging" and "to discharge" refer to a process of removing electrochemical energy from a battery.

As utilized herein, the terms "positive electrode" and "cathode" refer to an electrode at which electrochemical reduction and lithiation take place during a discharging process.

As utilized herein, the terms "negative electrode" and "anode" refer to an electrode at which electrochemical oxidation and delithiation take place during a discharging process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

While specific examples and are described herein, there may be alternatives, modifications, variations, improvements, and substantial equivalents of the examples disclosed herein, including those that are not presently unforeseen or unappreciated, may arise from applicants or those skilled in the art. Accordingly, the appended claims as filed and as they can be amended are intended to embrace all such alternatives, modifications, variations, improvements and substantial equivalents.

Hereinbelow, an all-solid secondary battery according to embodiments will be described in greater detail.

### All-Solid Secondary Battery

An all-solid secondary battery according to embodiments may include a cathode layer; an anode layer; and a solid electrolyte layer between the cathode layer and the anode layer, wherein the cathode layer may include a cathode current collector and a cathode active material layer on at least one surface (e.g., one or both (e.g., opposite) surfaces) of the cathode current collector, the anode layer may include an anode current collector and a first anode active material layer on at least one surface (e.g., one or both (e.g., opposite) surfaces) of the anode current collector, the first anode active material layer may include a composite anode active material, and the composite anode active material may include a first metal oxide represented by MₐO_{b} (0<a≤3 and 0<b<4, wherein if (e.g., when) a is 1, 2, or 3, b is not an integer); and a carbon-based material, wherein the first metal oxide may be disposed within a matrix of the carbon-based material, and M may be one or more metals selected from among metals in Groups 2 to 12 and Groups 14 to 16 of the Periodic Table of the Elements.

Because the composite anode active material includes the matrix of the carbon-based material, and the matrix of the carbon-based material has flexibility, volume changes of the first composite anode active material layer due to plating and/or dissolution of lithium during charging and discharging may be more easily accommodated. In some embodiments, volume changes of an all-solid secondary battery during charging and discharging may be reduced.

Because the composite anode active material includes a first metal oxide disposed through dispersion within the matrix of the carbon-based material, irregular electrode reactions that may be caused by agglomeration of the first metal oxide may be suppressed or reduced. Deterioration of an all-solid secondary battery due to localized side reactions caused by irregular electrode reactions, and localized excessive plating of lithium. As a result, the cycling performance of the all-solid secondary battery may improve. For example, because during the preparation of the composite anode active material, a matrix of a carbon-based material is formed as the carbon-based material grows from the surface of the second metal oxide, which is a precursor of the first metal oxide, and during the growth of the matrix of the carbon-based material, a structure in which the first metal oxide is dispersed within the matrix of the carbon-based material is created, agglomeration of particles of the first metal oxide within the matrix of the carbon-based material may be reduced or suppressed or reduced.

However, in a simple mixture of a carbon-based material and a metal oxide, substantially uniform distribution of the metal oxide within a matrix of the carbon-based material may be difficult to achieve due to agglomeration of the carbon-based material and/or agglomeration of the metal oxide. In an all-solid secondary battery including a simple mixture of a carbon-based material and a metal oxide, irregular electrode reactions during charging and discharging may be difficult to suppress or reduce. As a result, the cycling performance of the all-solid secondary battery may deteriorate.

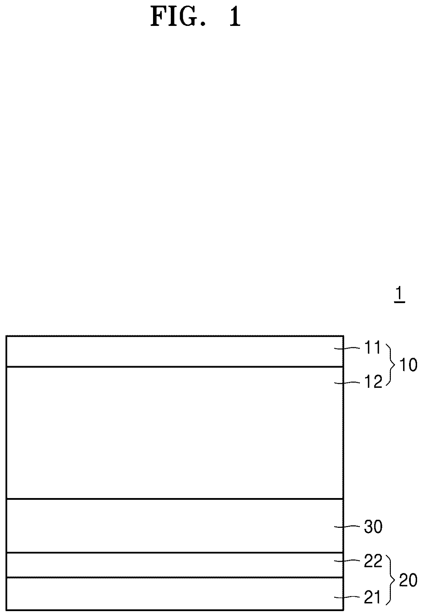

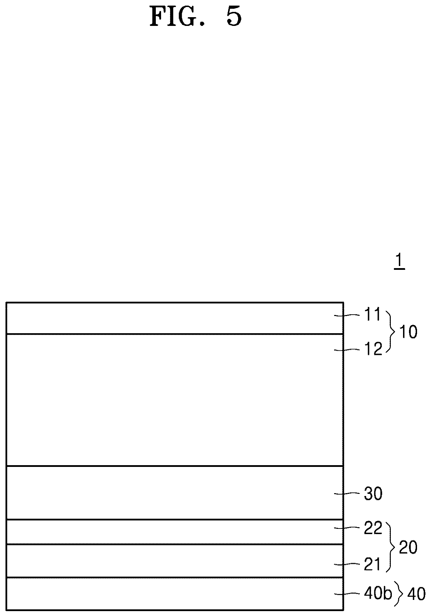

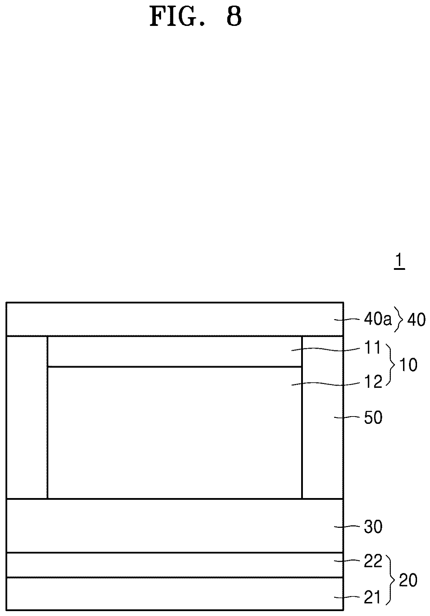

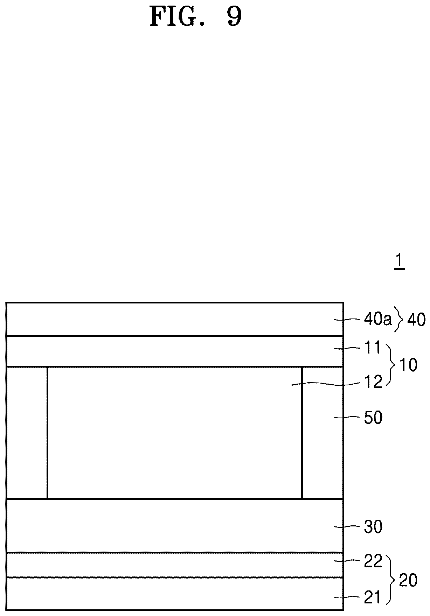

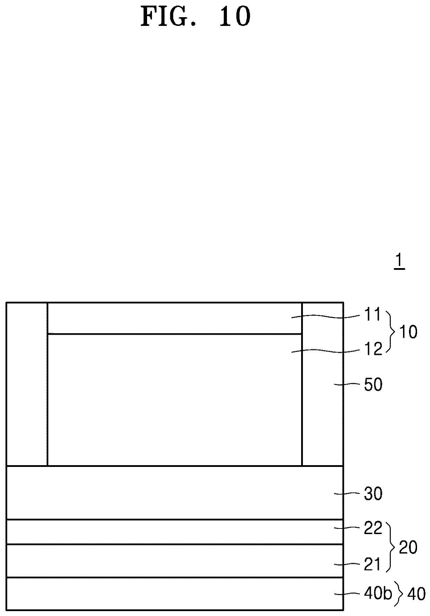

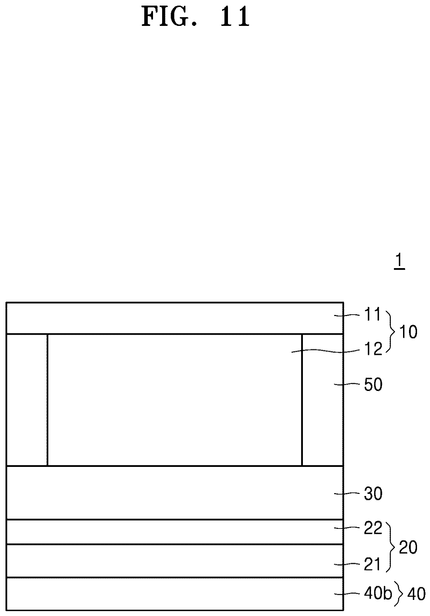

Referring to FIGS. 1 to 12, an all-solid secondary battery 1 may include a cathode layer 10; an anode layer 20; and an electrolyte layer 30 between the cathode layer 10 and the anode layer 20. The cathode layer 10 may include a cathode current collector 11 and a cathode active material layer 12 on at least one surface (e.g., one or both (e.g., opposite) surfaces) of the cathode current collector 11. The anode layer 20 may include an anode current collector 21 and a first anode active material layer 22 on at least one surface (e.g., one or both (e.g., opposite) surfaces) of the anode current collector 21. The first anode active material layer 22 may include a composite anode active material. The composite anode active material may include a first metal oxide represented by MₐO_{b} (0<a≤3 and 0<b<4, wherein if (e.g., when) a is 1, 2, or 3, b is not an interger); and a carbon-based material. The first metal oxide may be disposed within the matrix of the carbon-based material. M may be one or more metals selected from among metals in Groups 2 to 12, and Groups 14 to 16 of the Periodic Table of the Elements.

### Anode Layer

### Anode Layer: Composite Anode Active Materials

Referring to FIGS. 1 to 12, the anode layer 20 may include a first anode active material layer 22. The first anode active material layer 22 may include, for example, a composite anode active material.

The composite anode active material may include a first metal oxide represented by MₐO_{b} (0<a≤3 and 0<b<4, wherein if (e.g., when) a is 1, 2, or 3, b is not an interger); and a carbon-based material. The first metal oxide may be disposed within the matrix of the carbon-based material. M may be one or more metals selected from among metals in Groups 2 to 12, and Groups 14 to 16 of the Periodic Table of the Elements.

The first metal oxide may include a metal, and the metal may be, for example, one or more selected from among Si, Nb, Mg, Sc, Ti, Zr, V, W, Mn, Fe, Co, Pd, Cu, Ag, Zn, Sb, and Se. The first metal oxide may be, for example, one or more selected from among SiO_{y} (0<y<2), NbOₓ (0<x<2.5), MgOₓ (0<x<1), Sc₂O₂ (0<z<3), TiO_{y} (0<y<2), ZrO_{y} (0<y<2), V₂O₂ (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2). Because this first metal oxide is disposed within the matrix of the carbon-based material, substantially uniform dispersion of the first metal oxide within the first active material layer may be achieved, and volume changes during charging and discharging of the first anode active material layer may be reduced or suppressed or reduced. The first metal oxide may be, for example, SiO_{y} (0<y<2).

The composite anode active material may further include one or more second metal oxides, each represented by MₐO_{c} (0<a≤3 and 0<c≤4, wherein if (e.g., when a is 1, 2, or 3, c is an integer). M may be one or more metals selected from among metals in Groups 2 to 12, and Groups 14 to 16 of the Periodic Table of the Elements. For example, the second metal oxide and the first metal oxide may include the same metal. In some embodiments, c/a, the ratio of c to a in the second metal oxide may have a larger value than b/a, the ratio of b to a in the first metal oxide. For example, the relation c/a > b/a may be satisfied. The second metal oxide may be, for example, one or more selected from among SiO₂, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. The first metal oxide may be obtained by complete or partial reduction of the second metal oxide. In some embodiments, the first metal oxide may have a lower oxygen content (e.g., amount) and a lower oxidation number of the metal, compared to the second metal oxide. For example, the composite anode active material may include SiO_{y} (0<y<2) as a first metal oxide, and SiO₂ as a second metal oxide.

In the composite anode active material, a first metal oxide and a carbon-based material may be, for example, chemically bonded through a chemical bond. In the composite anode active material, the carbon atoms (C) of the carbon-based material and the first metal oxide may be chemically bonded through a C-O-M bond (e.g., a C-O-Si bond) via an oxygen atom. In the composite anode active material, a carbon-based material and a first metal oxide may be chemically bound through a chemical bond to form a composite of the carbon-based material and the first metal oxide. In some embodiments, the composite anode active material may be distinct from a simple physical mixture of the carbon-based material and the first metal oxide.

The composite anode active material may include, for example, at least one selected from among a first metal oxide and a second metal oxide, and the at least one selected from among the first metal oxide and the second metal oxide may (e.g., may be in a form of particles and the particles may) have an average particle diameter of, for example, about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 40 nm, about 3 nm to about 40 nm, about 3 nm to about 30 nm, about 5 nm to about 25 nm, or about 5 nm to about 20 nm. With the first metal oxide and/or the second metal oxide having a particle diameter in the aforementioned ranges, the first metal oxide and/or the second metal oxide may be more uniformly distributed within the matrix of the carbon-based material of the composite anode active material. In some embodiments, the first metal oxide and/or the second metal oxide may be uniformly disposed within the first anode active material layer. In some embodiments, substantially uniform dispersion of the first metal oxide and/or the second metal oxide in the first anode active material layer may suppress or reduce side reactions during charging and discharging or further improve reversibility of electrode reactions. As a result, the cycling performance of an all-solid secondary battery may further improve.

In the composite anode active material, average particle diameters of the first metal oxide and the second metal oxide may be measured by a measurement device that utilizes a laser diffraction technique or a dynamic light scattering technique. The average particle diameter may be measured by, for example, a laser scattering particle size distribution analyzer (for example, LA-920 manufactured by HORIBA) and is a median particle diameter (D50) at a cumulative percentage of about 50 vol% from the smallest particle size.

In the composite anode active material, the deviation in uniformity of at least one selected from among the first metal oxide and the second metal oxide may be about 3 % or less, about 2 % or less, or about 1 % or less. The uniformity may be measured, for example, by x-ray photoelectron spectroscopy (XPS). In some embodiments, within the composite, the at least one selected from the first metal oxide and the second metal oxide may be uniformly distributed with a deviation of about 3 % or less, about 2 % or less, or about 1 % or less.

The composite anode active material may include, for example, at least one selected from among a first metal oxide and a second metal oxide, and the content (e.g., amount) of the at least one selected from among the first metal oxide and the second metal oxide may be, for example, about 10 wt% to about 90 wt%, about 10 wt% to about 80 wt%, about 10 wt% to about 70 wt%, about 10 wt% to about 60 wt%, about 10 wt% to about 50 wt%, or about 20 wt% to about 45 wt%, with respect to a total weight of the composite anode active material. The content (e.g., amount) of the at least one selected from among the first metal oxide and the second metal oxide may be about 10 wt% to about 55 wt%, about 10 wt% to about 50 wt%, about 20 wt% to about 45 wt%, or about 20 wt% to about 45 wt%, with respect to a total weight of the composite anode active material. If (e.g., when) the content (e.g., amount) of the at least one selected from among the first metal oxide and the second metal oxide in the composite anode active material is excessively small, it may be difficult to provide the effect of anode active material. If (e.g., when) the content (e.g., amount) of the at least one selected from among the first metal oxide and the second metal oxide in the composite anode active material excessively increases, the internal resistance of the first anode active material layer may excessively increase due to a significant decrease of the electronic conductivity of the composite anode active material. As a result, the cycling performance of the all-solid secondary battery 1 may deteriorate.

In the composite anode active material, the carbon-based material may include, for example, a carbon-based nanostructure. The carbon-based nanostructure may include, for example, a two-dimensional carbon-based nanostructure. The two-dimensional carbon-based nanostructure may be, for example, graphene. In some embodiments, the matrix of a carbon-based material matrix may be, for example, a graphene matrix. If (e.g., when) the carbon-based material includes a two-dimensional carbon-based nanostructure, the first metal oxide and/or the second metal oxide may be easily disposed on the surface of the two-dimensional carbon-based nanostructure, and lithium ions and/or electrons may easily travel along the surface of the two-dimensional nanostructure. For example, if (e.g., when) the carbon-based material includes a two-dimensional carbon-based nanostructure, the reversibility of electrode reactions may improve. As a result, the cycling performance of the all-solid secondary battery may improve.

The composite anode active material may include a carbon-based material, and the carbon-based material may have, for example, a branched structure. At least one metal oxide selected from among the first metal oxide and the second metal oxide may be, for example, distributed within the branched structure of the carbon-based material. The branched structure of the carbon-based material may include, for example, a plurality of carbon-based material particles in contact with one another. If (e.g., when) the carbon-based material has such a branched structure, one or more suitable conduction paths may be provided.

The composite anode active material may include a carbon-based material, and the carbon-based material may be, for example, graphene. For example, the graphene may have a branched structure, and at least one metal oxide selected from among the first metal oxide and the second metal oxide may be distributed within the branched structure of the graphene. The branched structure of the graphene may include, for example, a plurality of graphene particles in contact with one another. As the graphene has such a branched structure, one or more suitable conduction paths may be provided.

The composite anode active material may include a carbon-based material, and the carbon-based material may have, for example, a spherical structure. At least one metal oxide selected from among the first metal oxide and the second metal oxide may be, for example, distributed within the spherical structures of the carbon-based material. The spherical structure of the carbon-based material may have, for example, a size of about 50 nm to about 300 nm. The spherical structure of the carbon-based material may include a plurality of carbon-based material particles in contact with one another. With the carbon-based material having a spherical structure, the composite anode active material may have a secure structure.

The composite anode active material may include a carbon-based material, and the carbon-based material may be, for example, graphene. For example, the graphene may have a spherical structure, and at least one metal oxide selected from among the first metal oxide and the second metal oxide may be distributed within the spherical structure of graphene. The spherical structure of the graphene may have, for example, a size of about 50 nm to about 300 nm. The spherical structure of the graphene may include a plurality of graphene particles in contact with one another. With the graphene having a spherical structure, the composite anode active material may have a secure structure.

The carbon-based material included in the composite anode active material may have, for example, a spiral structure in which a plurality of spherical structures are agglomerated. At least one metal oxide selected from among the first metal oxide and the second metal oxide may be, for example, distributed within the spherical structures constituting the spiral structure of the carbon-based material. The spiral structure of the carbon-based material may have, for example, a size of about 500 nm to about 100 µm. With the carbon-based material having a spiral structure, the composite anode active material may have a secure structure.

The carbon-based material included in the composite anode active material may be, for example, graphene. The graphene may have, for example, a spiral structure in which a plurality of spherical structures are connected, and at least one metal oxide selected from among the first metal oxide and the second metal oxide may be distributed within the spherical structures constituting the spiral structure. The spiral structure of the graphene may have, for example, a size of about 500 nm to about 100 µm. With the graphene having a spiral structure, the composite anode active material may have a secure structure.

For example, the carbon-based material included in the composite anode active material may have a cluster structure in which a plurality of spherical structures are agglomerated. At least one metal oxide selected from among the first metal oxide and the second metal oxide may be, for example, distributed within the spherical structures constituting the cluster structure of the carbon-based material. The cluster structure of the carbon-based material may have, for example, a size of about 5 µm to about 1,000 µm. With the carbon-based material having a cluster structure, the composite anode active material may have a secure structure.

The carbon-based material included in the composite anode active material may be, for example, graphene. The graphene may have, for example, a cluster structure in which a plurality of spherical structures are agglomerated, and at least one metal oxide selected from among the first metal oxide and the second metal oxide may be distributed within the spherical structures constituting the cluster structure. The cluster structure of the graphene may have, for example, a size of about 5 µm to about 1,000 µm. With the graphene having a cluster structure, the composite anode active material may have a secure structure.

The composite anode active material may have, for example, a crumpled faceted-ball structure, and at least one selected from among the first metal oxide and the second metal oxide may be distributed inside the structure or on the surface of the structure. If (e.g., when) the composite anode active material has such a faceted-ball structure, the composite anode active material may be more easily disposed on the surface of a solid electrolyte layer that includes irregular bumps.

The composite anode active material may be or have a planar structure, and at least one selected from among the first metal oxide and the second metal oxide may be distributed inside the structure or on the surface of the structure. If (e.g., when) the composite anode active material has such a two-dimensional planar structure, the composite anode active material may more easily cover the surface of a solid electrolyte layer that includes irregular bumps.

The carbon-based material included in the composite anode active material may extend from the first metal oxide by a distance of about 10 nm or less, and may include at least 1 to 20 carbon-based material layers. For example, as a plurality of carbon-based material layers are stacked, the carbon-based material having a total thickness of about 12 nm or less may be disposed on the first metal oxide. For example, the total thickness of the carbon-based material may be about 0.6 nm to about 12 nm.

The carbon-based material included in the composite anode active material may be, for example, graphene. The graphene may extend from the first metal oxide by a distance of about 10 nm or less, and may include at least 1 to 20 graphene layers. For example, as a plurality of graphene layers are stacked, graphene having a total thickness of about 12 nm or less may be disposed on the first metal oxide. For example, the total thickness of the graphene may be about 0.6 nm to about 12 nm.

The composite anode active material may have, for example, a particulate form (e.g., in a form of particles). The composite anode active material having the particulate form (e.g., the particles) may have an average particle diameter of, for example, about 4 µm or less, about 3 µm or less, about 2 µm or less, about 1 µm or less, about 500 nm or less, about 300 nm or less, or about 100 nm or less. The composite anode active material having the particulate form may have an average particle diameter of, for example, about 10 nm to about 4 µm, about 10 nm to about 3 µm, about 10 nm to about 2 µm, about 10 nm to about 1 µm, about 10 nm to about 500 nm, about 50 nm to about 300 nm, or about 50 nm to about 100 nm. If (e.g., when) the composite anode active material has an average particle diameter within the aforementioned ranges, reversible absorption and/or desorption of lithium during charging and discharging may be further facilitated. The average particle diameter of the composite anode active material may be, for example, a median particle diameter (D50) as measured by a laser-type or kind particle size distribution analyzer.

The first anode active material layer 22 may include an anode active material, and the anode active material may further include, for example, a carbon-based anode active material. The carbon-based anode active material may be distinct from the carbon-based materials included in the composite anode active material. The carbon-based anode active material may include, for example, amorphous carbon, crystalline carbon, porous carbon, or a combination thereof. The carbon-based anode active material may be, for example, an amorphous carbon. The amorphous carbon may be, for example, carbon black (CB), acetylene black (AB), furnace black (FB), Ketjen black (KB), graphene, and/or the like, but without being necessarily limited thereto, may be any material categorized as amorphous carbon in the art. Amorphous carbon is carbon with no crystalline structure or an extremely low degree of crystallinity and as such, may be distinguished from crystalline carbon or graphitic carbon. The carbon-based anode active material may be porous carbon, for example. For example, pores included in the porous carbon may have a pore volume of about 0.1 cc/g to about 10.0 cc/g, about 0.5 cc/g to about 5 cc/g, or about 0.1 cc/g to about 1 cc/g. For example, pores included in the porous carbon may have an average pore diameter of about 1 nm to about 50 nm, about 1 nm to about 30 nm, or about 1 nm to about 10 nm. The BET specific surface of the porous carbon may be, for example, about 100 m²/g to about 3,000 m²/g.

### Anode Layer: Binder

The first anode active material layer 22 may further include a binder. The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any material available as a binder in the art. The binder may be composed of a single type or kind of binder, or multiple binders of different types (kinds). The binder may include, for example, a fluorinated binder.

Because the first anode active material layer 22 includes a binder, the first anode active material layer 22 may be stabilized on the anode current collector 21. Further, crack formation in the first anode active material layer 22 may be suppressed or reduced, despite volume changes and/or displacement of the first anode active material layer 22 during charging and discharging processes. For example, if (e.g., when) the first anode active material layer 22 does not contain any binder, the first anode active material layer 22 may be easily delaminated from the anode current collector 21. The likelihood of a short circuit occurring may increase due to the anode current collector 21 and the solid electrolyte layer 30 coming in contact with each other at an area where the anode current collector 21 is exposed as a result of delamination of the first anode active material layer 22 from the anode current collector 21. For example, the first anode active material layer 22 may be prepared by applying and drying a slurry having dispersed therein materials forming the first anode active material layer 22 on the anode current collector 21. By including a binder in the first anode active material layer 22, stable dispersion of the anode active materials within the slurry may be achieved. For example, if (e.g., when) applying the slurry onto the anode current collector 21 by a screen-printing method, it may be possible to prevent or reduce the screen from clogging (for example, clogging by agglomerates of the anode active material).

### Anode Layer: Other Additives

The first anode active material layer 22 may further include other additives utilized in a all-solid secondary battery, such as a filler, a coating agent, a dispersing agent, an ionically conductive aid, and/or the like.

### Anode Layer: First Anode Active Material Layer

The initial charge capacity B of a first anode active material layer 22 may be smaller than the initial charge capacity A of a cathode active material layer 12. Initial charge capacity B of the first anode active material layer 22 may be, for example, less than about 100%, about 99% or less, about 90% or less, about 80% or less, about 70% or less, about 60 % or less, about 50 % or less, about 40 % or less, about 30 % or less, about 20 % or less, or about 10 % or less, with respect to initial charge capacity A of the cathode active material layer 12.

The ratio B/A of the initial charge capacity B of the first anode active material layer 22 to the initial charge capacity A of the cathode active material layer 12 may be, for example, about 0.01 to about 0.99, about 0.01 to about 0.9, about 0.01 to about 0.01. about 0.8, about 0.01 to about 0.7, about 0.01 to about 0.6, about 0.01 to about 0.5, about 0.01 to about 0.4, about 0.01 to about 0.3, about 0.01 to about 0.2 or about 0.01 to about 0.1. The initial charge capacity of the cathode active material layer 12 may be determined by charging to a maximum charging voltage vs. Li/Li⁺ from a first open circuit voltage. The initial charge capacity of the first anode active material layer 22 may be determined by charging to about 0.01 V vs. Li/Li⁺ from a second open circuit voltage. The maximum charging voltage may be determined by the type or kind of the cathode active material. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of Li₂S or a Li₂S composite may be about 2.5 V vs. Li/Li⁺. For example, the maximum charging voltage of Li₂S or a Li₂S composite may be about 3.0 V vs. Li/Li⁺.

The initial charge capacity (mAh) of the cathode active material layer 12 may be obtained by multiplying the charge specific capacity (mAh/g) of the cathode active material layer 12 by the mass (g) of a cathode active material in the cathode active material layer 12. If (e.g., when) multiple types (kinds) of cathode active materials are utilized, the product of charge specific density × mass may be calculated for each cathode active material, and the sum of these products may be defined as initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If (e.g., when) multiple types (kinds) of anode active materials are utilized, the product of charge specific density × mass may be calculated for each anode active material, and the sum of these products may be defined as initial charge capacity of the first anode active material layer 22. The charge specific density of each of the cathode active material and the anode active material may be measured utilizing an all-solid half-cell that uses lithium metal as a counter electrode. The initial charge capacity of each of the cathode active material layer 12 and the first anode active material layer 22 may be directly measured by utilizing an all-solid half-cell at a constant current density, for example, at about 0.1 mA/cm². For the cathode, this measurement may be made for an operating voltage from a first (1^{st}) open circuit voltage (OCV) to a maximum charge voltage, for example, about 3.0 V (vs. Li/Li⁺). For the anode, this measurement may be made for an operating voltage from a second (2^{nd}) OCV to about 0.01 V with respect to the anode, for example, lithium metal. For example, the all-solid half-cell having the cathode active material layer may be charged from the 1^{st} OCV to about 3.0 V with a constant current of about 0.1 mA/cm², and the all-solid half-cell having the first anode active material layer may be charged from the 2^{nd} OCV to about 0.01 V with a constant current of about 0.1 mA/cm². For example, the current density during the constant current charging may be about 0.2 mA/cm² or about 0.5 mA/cm². The all-solid half-cell having the cathode active material layer may be charged from the 1^{st} OCV to, for example, about 2.5 V, about 2.0 V, about 3.5 V, or about 4.0 V. The maximum charge voltage of the cathode active material layer may be determined according to the maximum voltage of a cell that satisfies the safety conditions described in JISC8712:2015 by Japanese Standards Association.

If (e.g., when) the initial charge capacity of the first anode active material layer 22 is excessively small, the thickness of the first anode active material layer 22 becomes extremely small, and as a result, lithium dendrites formed between the first anode active material layer 22 and the anode current collector 21 during repeated charging and discharging processes may cause disintegration of the first anode active material layer 22, making it difficult to achieve improved cycling performance of the all-solid secondary battery 1. If (e.g., when) the charge capacity of the first anode active material layer 22 is excessively large, the energy density of the all-solid secondary battery 1 may decrease, and the internal resistance of the all-solid secondary battery 1 by the first anode active material layer 22 may increase, making it difficult to achieve improved cycling performance of the all-solid secondary battery 1.

For example, a thickness of the first anode active material layer 22 may be about 50 % or less, about 40 % or less, about 30 % or less, about 20 % or less, or about 10 % or less, with respect to a thickness of the cathode active material layer 12. For example, a thickness of the first anode active material layer 22 may be about 1 % to about 50 %, about 1 % to about 40 %, about 1 % to about 30 %, about 1 % to about 20 %, or about 1 % to about 10 %, with respect to a thickness of the cathode active material layer 12. The first anode active material layer 22 may have a thickness of, for example, about 1 µm to about 50 µm, about 2 µm to about 40 µm, about 3 µm to about 30 µm, about 4 µm to about 20 µm, or about 5 µm to about 20 µm. If (e.g., when) the first anode active material layer 22 is excessively thin, lithium dendrites formed between the first anode active material layer 22 and the anode current collector 21 may cause disintegration of the first anode active material layer 22, making it difficult to achieve improved cycling performance of the all-solid secondary battery 1. If (e.g., when) the thickness of the first anode active material layer 22 excessively increases, the energy density of the all-solid secondary battery 1 may decrease, and the internal resistance of the all-solid secondary battery 1 by the first anode active material layer 22 may increase, thus making it difficult to achieve improved cycling performance of the all-solid secondary battery 1. With decreasing thickness of the first anode active material layer 22, for example, the initial charge capacity of the first anode active material layer 22 may also decrease.

### Anode: Second Anode Active Material Layer

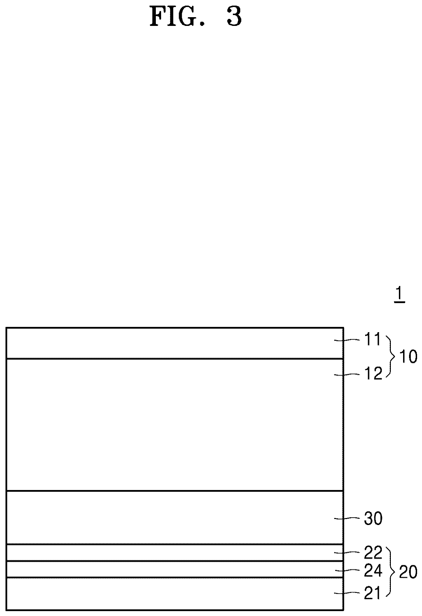

Referring to FIG. 3, the all-solid secondary battery 1 may further include, after charging, for example, a second anode active material layer 24 that is disposed between the anode current collector 21 and the first anode active material layer 22. The second anode active material layer 24 may be a metal layer including lithium or a lithium alloy. The metal layer may include lithium or a lithium alloy. In some embodiments, the second anode active material layer 24, as it is a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, may be any material available as a lithium alloy in the art. The second anode active material layer 24 may be composed of one of such alloys, or lithium, or may be composed of one or more suitable types (kinds) of alloys. The second anode active material layer 24 may be, for example, a plated layer. For example, the second anode active material layer 24 may be plated between the first anode active material layer 22 and the anode current collector 21 during a charging process of the all-solid secondary battery 1.

A thickness of the second anode active material layer 24 is not limited, but may be, for example, about 1 µm to about 200 µm, about 1 µm to about 150 µm, about 1 µm to about 100 µm, about 1 µm to about 50 µm, about 1 µm to about 30 µm, about 1 µm to about 22 µm, or about 1 µm to about 10 µm. If (e.g., when) the thickness of the second anode active material layer 24 is excessively small, the second anode active material layer 24 may fail to sufficiently function as a lithium reservoir. If (e.g., when) the thickness of the second anode active material layer 24 is excessively large, the mass and volume of the all-solid secondary battery 1 may increase, and the cycling performance of the all-solid secondary battery 1 may be more likely to rather deteriorate.

For example, a thickness of the second anode active material layer 24 may be less than a thickness of the first anode active material layer 22. The thickness of the second anode active material layer 24 may be, for example, about 70% or less, about 60% or less, about 50% or less, about 40% or less, or about 30% or less, with respect to the thickness of the first anode active material layer 22. The thickness of the second anode active material layer 24 may be, for example, about 1 % to about 70 %, about 1 % to about 60 %, about 1 % to about 50 %, about 1 % to about 40 %, or about 1 % to about 30 %, with respect to a thickness of the first anode active material layer 22. As the thickness of the second anode active material layer 24 becomes smaller relative to the thickness of the first anode active material layer 22, volume changes of an all-solid secondary battery during charging and discharging may be reduced or suppressed or reduced. As a result, deterioration of the all-solid secondary battery due to volume changes may be reduced or suppressed or reduced.

In some other embodiments, in the all-solid secondary battery 1, the second anode active material layer 24 may be, for example, disposed between the anode current collector 21 and the first anode active material layer 22 prior to assembly of the all-solid secondary battery 1. In a case in which the second anode active material layer 24 is to be disposed between the anode current collector 21 and the first anode active material layer 22 prior to assembly of the all-solid secondary battery 1, the second anode active material layer 24, as it is a metal layer containing lithium, may act as a lithium reservoir. For example, a lithium foil may be disposed between the anode current collector 21 and the first anode active material layer 22 prior to assembly of the all-solid secondary battery 1.

In a case in which the second anode active material layer 24 is to be plated by charging after assembly of the all-solid secondary battery 1, because the second anode active material layer 24 is not included at the time of assembly of the all-solid secondary battery 1, the all-solid secondary battery 1 may have increased energy density. If (e.g., when) charging the all-solid secondary battery 1, the charging may be performed exceeding the charge capacity of the first anode active material layer 22. The first anode active material layer 22 may be then overcharged. At the beginning of the charging, lithium may be absorbed into the first anode active material layer 22. The anode active material included in the first anode active material layer 22 may form an alloy or a compound with lithium ions moved from the cathode 10. If (e.g., when) the charging is performed exceeding the capacity of the first anode active material layer 22, lithium may be precipitated, for example, on the back surface of the first anode active material layer 22, for example, between the anode current collector 21 and the first anode active material layer 22, and the precipitated lithium then may form a metal layer that corresponds to the second anode active material layer 24. The second anode active material layer 24 may be a metal layer mainly composed of lithium (i.e., metal lithium). This result may be attributed to the fact that the anode active material included in the first anode active material layer 22 includes a material that forms an alloy or compound with lithium. During discharge, lithium in metal layers, for example, in the first anode active material layer 22 and the second anode active material layer 24, may be ionized and migrate toward the cathode 10. In some embodiments, it is possible to utilize lithium as an anode active material in the all-solid secondary battery 1. In some embodiments, the first anode active material layer 22 covers the second anode active material layer 24, and as such, may function as a protective layer for the metal layer, for example, the second anode active material layer 24, while suppressing precipitation and growth of lithium dendrites. In some embodiments, a short circuit and capacity fading in the all-solid secondary battery 1 may be suppressed or reduced, and consequently, the cycling performance of the all-solid secondary battery 1 may improve. In some embodiments, in a case in which the second anode active material layer 24 is to be disposed by charging after assembly of the all-solid secondary battery 1, the anode 20, for example, the anode current collector 21, the first anode active material layer 22, and the area therebetween, may be a Li-free region free of Li (e.g., not including Li) while the all-solid secondary battery 1 is in the initial state or a fully discharged state.

### Anode: Anode Current Collector

The anode current collector 21 may be formed of a material that does not react with lithium, for example, does not form an alloy or a compound with lithium. The material forming the anode current collector 21 may be, for example, copper (Cu), stainless steel, titanium (Ti), iron (Fe), cobalt (Co), nickel (Ni), and/or the like, but without being necessarily limited thereto, may be any material available as an electrode current collector in the art. The anode current collector 21 may be formed of one type or kind of the aforementioned metals, an alloy of two or more types (kinds) metals thereof, or a covering material. The anode current collector 21 may be, for example, a plate type or kind or a foil type or kind.

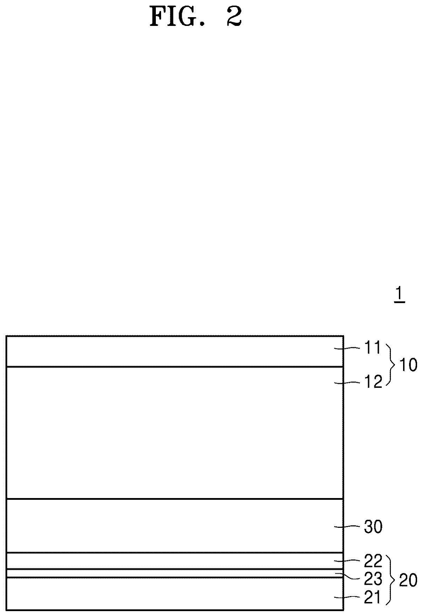

Referring to FIG. 2, the all-solid secondary battery 1 may further include a thin film 23 that contains an element capable of forming an alloy with lithium, on at least one surface (e.g., one or both (e.g., opposite) surfaces) of the anode current collector 21. The thin film 23 may be positioned between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but without being limited thereto, any element available in the art that is capable of forming an alloy with lithium may be utilized. The thin film 23 may be composed of one of the aforementioned metals or may be composed of an alloy of one or more suitable kinds of metals. If (e.g., when) the thin film 23 is disposed on the anode current collector 21, the form of the second anode active material layer 24 being plated between the thin film 23 and the first anode active material layer 22 may have a further flattened form, and the cycling performance of the all-solid secondary battery 1 may further improve.

For example, the thin film 23 may have a thickness of about 1 nm to about 800 nm, about 10 nm to about 700 nm, about 50 nm to about 600 nm, or about 100 nm to about 500 nm. If (e.g., when) the thickness of the thin film 23 is less than about 1 nm, functions attributable to the thin film 23 may be difficult to achieve. If (e.g., when) the thickness of the thin film 23 is excessively large, the thin film 23 may be configured to absorb lithium by itself, causing the amount of lithium being plated at the anode to decrease, and as a result, the all-solid secondary battery 1 may have decreased energy density and deteriorated cycling performance. The thin film 23 may be positioned on the anode current collectors 21 by a vacuum deposition method, a sputtering method, a plating method and/or the like, but is not limited to the aforementioned methods and may be any method available in the art that is capable of forming the thin film 23.

In some embodiments, the anode current collector 21 may include a base film, and a metal layer disposed on one surface or opposite surfaces of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer. As the base film includes an insulating thermoplastic polymer, in the event of a short circuit, the base film is softened or liquefied, blocking the operation of the battery, to thereby prevent or reduce a rapid increase in electrical current. For example, the metal layer may include copper (Cu), stainless steel, titanium (Ti), iron (Fe), cobalt (Co), nickel (Ni), or an alloy thereof. The anode current collector 21 may further include a metal chip and/or a lead-tab. For detailed descriptions of the base film, the metal layer, the metal chip, and the lead-tab of the anode current collector 21, refer to the cathode current collector 11 described above. If (e.g., when) the anode current collector 21 has the above structure, the weight of the anode may be reduced, and as a result, energy density of the anode and the lithium battery may improve.

### Anode Layer: First Inactive Member

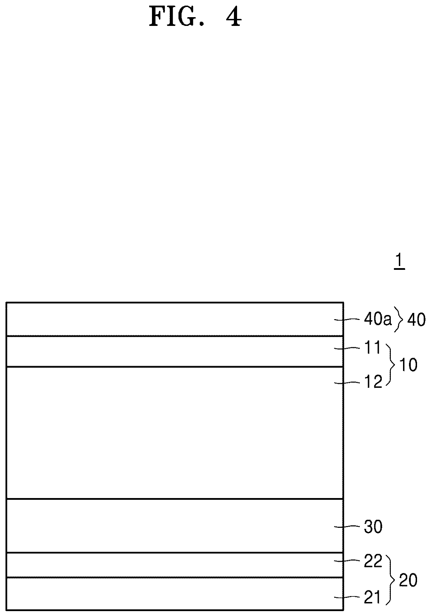

Referring to FIGS. 4 and 5 and FIGS. 8 to 12, the all-solid secondary battery 1 may further include a first inactive member 40, 40a, 40b disposed on at least one selected from among the opposite side to the one surface of the anode current collector 21 and the opposite side to the one surface of the cathode current collector 11.

The first inactive member 40, 40a, 40b may not contain an electrode active material. The first inactive member 40, 40a, 40b may be, for example, an insulating member.

The first inactive member 40, 40a, 40b may have a conductivity by additionally containing a conductive material. The first inactive member 40, 40a, 40b may be, for example, a flame-retardant inactive member by additionally containing a flame-retardant material.

The first inactive member 40, 40a, 40b may be, for example, an elastic member. The first inactive member 40, 40a, 40b may be, for example, a porous elastic member. The first inactive member 40, 40a, 40b may be, for example, an elastic member that has at least one of suitable porosity, suitable conductivity, or suitable flame retardancy.

The first inactive member 40, 40a, 40b may impart a cushioning function to an all-solid secondary battery 1. The first inactive member 40, 40a, 40b may provide, for example, stress relaxation and a restoring force. The first inactive member 40, 40a, 40b may effectively accommodate volume changes of an all-solid secondary battery 1 and apply substantially uniform pressure to the all-solid secondary battery 1.

For example, the first inactive member 40, 40a, 40b may have a lower elastic modulus than the anode current collector 21. If (e.g., when) the first inactive member 40, 40a, 40b has a lower elastic modulus than the anode current collector 21, volume changes of the anode layer 20 during charging and discharging of the all-solid secondary battery 1 may be more effectively accommodated. Because the first inactive member 40, 40a, 40b effectively buffers an internal stress caused by a volume change of the all-solid secondary battery 1 during charging and discharging of the all-solid secondary battery 1, the cycling performance of the all-solid secondary battery 1 may improve.

The first inactive member 40, 40a, 40b may be disposed on the anode layer 20 of the all-solid secondary battery 1. Because the anode layer 20 undergoes a larger volume change than the cathode layer 10 and the solid electrolyte layer 30 during charging and discharging of the all-solid secondary battery 1, placing the first inactive member 40, 40a, 40b adjacent to the anode layer 20 may allow volume changes of the anode layer 20 to be more effectively accommodated. In some embodiments, as the first inactive member 40, 40a, 40b applies substantially uniform pressure to the anode layer 20, substantially uniform plating of lithium metal may be induced at the anode layer 20. Defect formation in the all-solid secondary battery 1 due to substantially non-uniform plating of lithium metal may then be more effectively prevented or reduced. The first inactive member 40, 40a, 40b may be a porous multilayer member or a porous cushioning layer.

The first inactive member 40, 40a, 40b may include a polymer material, a rubber material, or a combination thereof. By including a polymer material, a rubber material, or a combination thereof, the first inactive member 40, 40a, 40b may show stress relaxation and have a restoring force. The polymer material may include, for example, a polyurethane-based polymer, a polyacrylic-based polymer, a polystyrenebased polymer, a polyester-based polymer, a polyamide-based polymer, a polyolefin-based polymer, or a combination thereof. The polymer material may be, for example, a polymer resin. The polymer material may be, for example, an adhesive resin. The rubber material may include, for example, natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, chloroprene rubber (CR), halogenated isoprene rubber, halogenated isobutylene copolymers, butyl rubber (IIR), halogenated isobutylene-p-methyl styrene rubber, or a combination thereof. The polyurethane-based polymer may include, for example, polyester-based polyurethane, polyether-based polyurethane, or a combination thereof. The polyacrylic-based polymer may include, for example, polyacrylate, polymethyl acrylate, polymethacrylate, polymethyl methacrylate, or a combination thereof. The polystyrenebased polymer may include, for example, a styrene-ethylene-butylene copolymer (SEB), a styrene-butadiene-styrene copolymer (SBS), hydrogenated SBS (styrene-ethylene-butylene-styrene copolymer (SEBS)), a styrene-isoprene-styrene copolymer (SIS), hydrogenated SIS (styrene-ethylene-propylene-styrene copolymer (SEPS)), a styrene-isobutylene-styrene copolymer (SIBS), styrene-butadiene-styrene-butadiene (SBSB), styrene-butadiene-styrene-butadiene-styrene (SBSBS), polystyrene (PS), an acrylonitrile styrene copolymer (AS), an acrylonitrile butadiene-styrene copolymer (ABS), or a combination thereof. The polyester-based polymer may include, for example, polyethylene terephthalate, polybutylene terephthalate, or a combination thereof. The polyamide-based polymer may include, for example, Polyamide 6, Polyamide 11, Polyamide 12, Polyamide 66, Polyamide 610, or a combination thereof. The polyolefin-based polymer may include, for example, polyethylene, polypropylene, an ethylene propylene copolymer, a propylene-1-hexene copolymer, a propylene-4-methyl-1-pentene copolymer, a propylene-1-butene copolymer, an ethylene-1-hexene copolymer, an ethylene-4- methyl-pentene copolymer, an ethylene-1-butene copolymer, a 1-butene-1-hexene copolymer, 1-butene-4-methyl-pentene, an ethylene/methacrylic acid copolymer, an ethylene-methacrylic acid ethyl copolymer, an ethylene methacrylic acid butyl copolymer, an ethylene-methyl acrylate copolymer, an ethylene-ethyl acrylate copolymer, an ethylene-butyl acrylate copolymer, a propylene-methacrylic acid copolymer, a propylene-methacrylic acid methyl copolymer, a propylene-methacrylic acid ethyl copolymer, a propylene-methacrylic acid butyl copolymer, a propylene-methylacrylate copolymer, a propylene-acrylic acid ethyl copolymer, a propylene-butylacrylate copolymer, an ethylene-vinyl acetate polymer (EVA), a polyolefin of a propylene vinyl acetate copolymer, or a combination thereof.

The first inactive member 40, 40a, 40b may include, for example, a porous foam, a porous sponge, or a combination thereof. The first inactive member 40, 40a, 40b may include, for example, a porous foam sheet, a porous sponge sheet, or a combination thereof. The first inactive member 40, 40a, 40, by having such a form, may provide porosity and cushioning function at the same time. The porous foam may include, for example, closed cells, open cells, or a combination thereof. The porous sponge may include, for example, closed cells, open cells, or a combination thereof. The closed cells refer to closed pores, which are cells or pores that are disconnected from the around (e.g., surrounding) atmosphere. The open cells refer to open cells or pores that are connected to the around (e.g., surrounding) atmosphere. The first inactive member 40, 40a, 40b may include, for example, a closed-cell porous foam, an open-cell porous foam, a closed-cell porous sponge, an open-cell porous sponge, or a combination thereof. For example, the porous foam may include both (e.g., simultaneously) closed cells and open cells at the same time. For example, the porous sponge may include both (e.g., simultaneously) closed cells and open cells at the same time.

The first inactive member 40, 40a, 40b may include, for example, a conductive material. Examples of the conductive material may include graphite, carbon black, acetylene black, Ketjen black, Denka black, carbon fibers, carbon nanotubes (CNTs), graphene, metal fibers, metal powder, and/or the like. The content (e.g., amount) of the conductive material included in the first inactive member 40, 40a, 40b may be, for example, about 1 part by weight to about 30 parts by weight, about 1 part by weight to about 20 parts by weight, about 1 part by weight to about 15 parts by weight, about 1 part by weight to about 10 parts by weight, about 5 parts by weight to about 40 parts by weight, about 5 parts by weight to about 30 parts by weight, or about 5 parts by weight to about 35 parts by weight, with respect to 100 parts by weight of the first inactive member 40, 40a, 40b. The first inactive member 40, 40a, 40b, due to having conductivity, may act as the anode current collector 20.

The first inactive member 40, 40a, 40b may include, for example, a matrix and a filler. For example, the matrix may include a substrate and a reinforcing material. For example, the matrix may include a fibrous substrate and a fibrous reinforcing material. If (e.g., when) the matrix includes a fibrous substrate, the matrix may have elasticity. The fibrous substrate may include, for example, one or more selected from pulp fibers, insulating polymer fibers, and ionically conductive polymer fibers. If (e.g., when) the matrix includes the reinforcing material, strength of the matrix may improve. For example, the fibrous reinforcing material may be glass fibers, metal oxide fibers, ceramic fibers, and/or the like. The fibrous reinforcing material may be, for example, a flame-retardant material. The filler may be, for example, a moisture getter and/or a flame retardant. For example, the filler may be a metal hydroxide having hygroscopicity. The metal hydroxide included in the filler may be, for example, Mg(OH)₂, Fe(OH)₃, Sb(OH)₃, Sn(OH)₄, TI(OH)₃, Zr(OH)₄, Al(OH)₃, or a combination thereof.

A thickness of the first inactive member 40, 40a, 40b may be, for example, more than a thickness of the first anode active material layer 22. If (e.g., when) the thickness of the first inactive member 40, 40a, 40b is larger than that of the first anode active material layer 22, volume changes of the anode layer 20 during charging and discharging may be more effectively accommodated. A thickness of the first anode active material layer 22 may be about 50 % or less, about 40 % or less, about 30 % or less, about 20 % or less, or about 10 % or less, with respect to a thickness of the first inactive member 40, 40a, 40b. A thickness of the first anode active material layer 22 may be, for example, about 1 % to about 50 %, about 1 % to about 40 %, about 1 % to about 30 %, about 1 % to about 20 %, or about 1 % to about 10 %, with respect to a thickness of the first inactive member 40, 40a, 40b. A thickness of the first inactive member 40, 40a, 40b may be, for example, about 10 µm to about 300 µm, about 20 µm to about 300 µm, about 50 µm to about 300 µm, or about 100 µm to about 200 µm. If (e.g., when) the first inactive member 40, 40a, 40b is excessively thin, it may be difficult to achieve the intended effect, whereas if (e.g., when) the first inactive member 40, 40a, 40b is excessively thick, the energy density of the all-solid secondary battery 1 may decrease. The shape of the first inactive member 40, 40a, 40b is not limited and may be selected depending on the shape of the all-solid secondary battery 1. The first inactive member 40, 40a, 40b may be, for example, in the form of (e.g., includes) a sheet, a rod, or a gasket.

### Cathode Layer

### Cathode Layer: Cathode Active Material

Referring to FIGS. 1 to 12, the cathode active material layer 12 may include, for example, a cathode active material.

The cathode active material included in the cathode active material layer 12 may be a cathode active material capable of reversible absorption and desorption of lithium ions. The cathode active material may include, for example, an oxide-based cathode active material, a sulfide-based cathode active material, or a combination thereof.

The oxide-based cathode active material may include, for example, a lithium transition metal oxide, a metal oxide, or a combination thereof. The lithium transition metal oxide may include, for example, a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof. A lithium oxide may include, for example, an iron oxide, a vanadium oxide, or a combination thereof.

The sulfide-based cathode active material may include, for example, nickel sulfide, copper sulfide, Li₂S, a Li₂S-containing composite, or a combination thereof.

The oxide-based cathode active material may include, for example, one or more selected from among composite oxides of lithium with a metal selected from among cobalt, manganese, nickel, and a combination thereof. For example, the lithiumcontaining oxide-based cathode active material may include a compound represented by any one of the following formulas: LiₐA_{1-b}B'_{b}D₂ (in the formula, 0.90≤a≤1 and 0≤b≤0.5); LiₐE_{1-b}B'_{b}O_{2-c}D_{c} (in the formula, 0.90≤a≤1, 0≤b≤0.5, 0≤c≤0.05); LiE_{2-b}B'_{b}O_{4-c}D_{c} (in the formula, 0≤b≤0.5, 0≤c≤0.05); LiₐNi_{1-b-c}Co_{b}B'_{c}D_{α} (in the formula, 0.90≤a≤1, 0≤b≤0.5, 0≤c≤0.05, 0≤α≤2); LiₐNi_{1-b-c}Co_{b}B'_{c}O_{2-α}F'_{α} (in the formula, 0.90≤a≤1, 0≤b≤0.5, 0≤c≤0.05, 0<α<2); LiₐNi_{1-b-c}Mn_{b}B'_{c}Dₐ (in the formula, 0.90≤a≤1, 0≤b≤0.5, 0≤c≤0.05, 0<α≤2); LiₐNi_{1-b-c}Mn_{b}B'_{c}O_{2-α}F'_{α} (in the formula, 0.90≤a≤1, 0≤b≤0.5, 0≤c≤0.05, 0<α<2); LiₐNi_{b}E_{c}G_{d}O₂ (in the formula, 0.90≤a≤1, 0≤b≤0.9, 0≤c≤0.5, 0.001 ≤d≤0.1); LiₐNi_{b}Co_{c}Mn_{d}GₑO₂ (in the formula, 0.90≤a≤1, 0≤b≤0.9, 0≤c≤0.5, 0≤d ≤0.5, 0.001≤e≤0.1); LiₐNiG_{b}O₂ (in the formula, 0.90≤a≤1, 0.001≤b≤0.1); LiₐCoG_{b}O₂ (in the formula, 0.90≤a≤1, 0.001≤b≤0.1); LiₐMnG_{b}O₂ (in the formula, 0.90≤a≤1, 0.001≤b≤0.1); LiₐMn₂G_{b}O₄ (in the formula, 0.90≤a≤1, 0.001≤b≤0.1); LiV₂O₅; Lil'O₂; LiNiVO₄; Li_{(3-f)}J₂(PO₄)₃ (0≤f≤2); Li_{(3-f)}Fe₂(PO₄)₃ (0≤f≤2); and LiFePO₄.

In the formulas representing the aforementioned compounds, A may be nickel (Ni), cobalt (Co), manganese (Mn), or a combination thereof; B' may be aluminum (Al), Ni, Co, Mn, chromium (Cr), iron (Fe), magnesium (Mg), strontium (Sr), vanadium (V), a rare earth element, or a combination thereof; D' may be oxygen (O), fluorine (F), sulfur (S), phosphorus (P), or a combination thereof; E may be Co, Mn, or a combination thereof; F' may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I' may be Cr, V, Fe, Sc, yttrium (Y), or a combination thereof; and J may be V, Cr, Mn, Co, Ni, copper (Cu), or a combination thereof. A compound having a coating layer added on a surface of the above compound may also be utilized. Furthermore, a mixture of the above compound with a compound having a coating layer added thereon may also be utilized. The coating layer added on the surface of the aforementioned compound may include, for example, compounds of a coating element, such as oxides and hydroxides of the coating element, oxyhydroxides of the coating element, oxycarbonates of the coating element, and hydroxycarbonates of the coating element. A compound forming this coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer may be selected within a range that does not adversely affect physical properties of a cathode active material. Examples of a coating method may include spray coating, dip coating, and/or the like. Specific coating methods suitable to those of ordinary skill in the art may be utilized and therefore, detailed descriptions thereof will not be provided here.

The oxide-based cathode active material may include, for example, a lithium transition metal oxide represented by Formulas 1 to 8:

Formula 1 LiₐNiₓCO_{y}M_{z}O_{2-b}A_{b}

In Formula 1,
1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A may be F, S, Cl, Br or a combination thereof,

   Formula 2 LiNiₓCo_{y}Mn_{z}O₂

   Formula 3 LiNiₓCo_{y}Al_{z}O₂

In Formulas 2 and 3, 0.8≤x≤0.95, 0≤y≤0.2, 0<z≤0.2, and x+y+z=1,

Formula 4 LiNiₓCo_{y}Mn_{z}Al_{w}O₂

In Formula 4, 0.8≤x≤0.95, 0≤y≤0.2, 0<z≤0.2, 0<w≤0.2, and x+y+z+w=1,

Formula 5 LiₐCoₓM_{y}O_{2-b}A_{b}

In Formula 5,
1.0≤a≤1.2, 0≤b≤0.2, 0.9≤x≤1, 0≤y≤0.1, and x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A may be F, S, Cl, Br or a combination thereof,

   Formula 6 LiₐNiₓMn_{y}M'_{z}O_{2-b}A_{b}

In Formula 6,
1.0≤a≤1.2, 0≤b≤0.2, 0<x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A may be F, S, Cl, Br or a combination thereof,

   Formula 7 LiₐM1ₓM2_{y}PO_{4-b}X_{b}

In Formula 7, 0.90≤a≤1.1, 0≤x≤0.9, 0≤y≤0.5, 0.9<x+y<1.1, and 0≤b≤2,
M1 may be chromium (Cr), manganese (Mn), iron (Fe), cobalt (Co), nickel (Ni), copper (Cu), zirconium (Zr), or a combination thereof, and
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof.

   Formula 8 LiₐM3_{z}PO₄

In Formula 8, 0.90≤a≤1.1 and 0.9≤z≤1.1,
M3 may be chromium (Cr), manganese (Mn), iron (Fe), cobalt (Co), nickel (Ni), copper (Cu), zirconium (Zr), or a combination thereof.

The oxide-based cathode active material may be covered by a cover layer. The cover layer may be any material suitable as a cover layer of a cathode active material in an all-solid secondary battery in the art. The coating layer may be, for example, Li₂O-ZrO₂ (LZO) and/or the like.

A size of the oxide-based cathode active material may be, for example, about 0.1 µm to about 30 µm, about 0.5 µm to about 20 µm, or about 1 µm to about 15 µm. The oxide-based cathode active material may be, for example, single-crystal particles or polycrystal particles.

The sulfide-based cathode active materials may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon may include a carbon. The carbon may be, for example, any carbon-containing material available as a conductive material in the art. The carbon may be, for example, crystalline carbon, amorphous carbon, or a combination thereof. The carbon may be, for example, a fired product of a carbon precursor. The carbon may be, for example, a carbon nanostructure. Examples of the carbon nanostructure may include a one-dimensional carbon nanostructure, a two-dimensional carbon nanostructure, a three-dimensional carbon nanostructure, or a combination thereof. The carbon nanostructure may include, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon or non-porous carbon. The porous carbon may contain, for example, a periodic and regular two-dimensional or three-dimensional pore. Examples of the porous carbon may include carbon black such as Ketjen black, acetylene black, Denka black, thermal black, and channel black; and graphite, activated carbon, or a combination thereof. The form of the carbon may be a particulate form, a sheet form, a fibrous form, and/or the like, but without being limited thereto, any material available as carbon in the art may be utilized. The composite of Li₂S and carbon may be prepared by methods including, but not limited to a dry method, a wet method, or a combination thereof. Further, methods available in the art for preparing a composite of Li₂S and carbon include milling, heat treatment, deposition, and/or the like, but without being limited to the aforementioned methods, any method available in the art may be utilized.

The composite of Li₂S, carbon, and solid electrolyte composite may include a carbon and a solid electrolyte. For details of the carbon, refer to the composite of Li₂S and carbon described above. The solid electrolyte may be, for example, a formless solid electrolyte and may be any material available as an ionically conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may contain, for example, Li, S, and P, and may optionally further contain a halogen element. The sulfide-based solid electrolyte may be selected from among sulfide-based solid electrolytes that are utilized in a solid electrolyte layer. The sulfide-based solid electrolyte may have an ionic conductivity of about 1×10⁻⁵ S/cm or more at room temperature, for example. The sulfide-based solid electrolyte may include, for example, one or more selected from among Li₃PO₄-Li₂SO₄, Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ, wherein m and n each are a positive number, and Z is Ge, Zn or Ga; Li₂S-GeS₂, Li₂S-SiS₂-Li₃PO₄, Li₂S-SiS₂-LiₚMO_{q}, wherein p and q each are a positive number and M is P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2, and Li₇₋ₓPS₆₋ₓIₓ, wherein 0≤x≤2**.** The oxide-based solid electrolyte may contain, for example, Li, O, and a transition metal element, and may optionally further contain other elements. For example, the oxide-based solid electrolyte may be a solid electrolyte having an ionic conductivity of about 1×10⁻⁵ S/cm or more at room temperature. The oxide-based solid electrolyte may be selected from among oxide-based solid electrolytes that are utilized in a solid electrolyte layer. The solid electrolyte may be a mixture of a sulfide-based solid electrolyte and a lithium salt, for example. For example, the solid electrolyte may be a mixture of Li₃PO₄-Li₂SO₄ and a binary lithium salt or a mixture of Li₃PO₄-Li₂SO₄ and a ternary lithium salt.

The composite of Li₂S and solid electrolyte may include a solid electrolyte. For details of the solid electrolyte, refer to the composite of Li₂S, carbon, and solid electrolyte above.

A composite of Li₂S and a lithium salt may include a lithium salt compound. The lithium salt compound does not contain sulfur (S) atoms, for example. For example, the lithium salt compound may be a binary compound composed of lithium and one element selected from among Groups 13 to 17 of the Periodic Table of the Elements. The binary compound may include, for example, one or more selected from among LiF, LiCl, LiBr, Lil, LiH, Li₂S, Li₂O, Li₂Se, Li₂Te, LisN, LisP, Li₃As, LisSb, LiI₃, and LiBs. For example, the lithium salt compound may be a ternary compound composed of lithium and two or more elements selected from among Groups 13 to 17 of the Periodic Table of the Elements. The ternary compound may include, for example, one or more selected from among Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, and Li₃BN₂. In some embodiment, the lithium salt compound may be at least one lithium halide compound selected from among LiF, LiCl, LiBr, and Lil. The composite of Li₂S and solid electrolyte may include a solid electrolyte. For details of the solid electrolyte, refer to the solid electrolyte utilized in the composite of Li₂S, carbon, and a solid electrolyte described above. The composite of Li₂S and a solid electrolyte may include, for example, a composite of Li₂S with one or more lithium salts selected from among LiF, LiCl, LiBr, Lil, LiH, Li₂S, Li₂O, Li₂Se, Li₂Te, LisN, LisP, LisAs, LisSb, LiI₃, and LiBs.

A composite of Li₂S, a lithium salt, and carbon may include a lithium salt compound and carbon. For details of the carbon, refer to the composite of Li₂S and carbon described above.

The composite of Li₂S and metal carbide may include a metal carbide. The metal carbide may be, for example, a two-dimensional metal carbide. A two-dimensional metal carbide may be, for example, MXene. The two-dimensional metal carbide may be represented by, for example, Mₙ₊₁CₙTₓ (M is a transition metal, T is a terminal group, T is O, OH and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. The surface of the two-dimensional metal carbide may be terminated by O, OH, and/or F.

The composite of Li₂S, carbon, and a metal carbide may include carbon and a metal carbide. For details of the carbon, refer to the composite of Li₂S and carbon described above. For details of the metal carbide, refer to the composite of Li₂S and a metal carbide described above.

The composite of Li₂S and a metal nitride may include a metal nitride. The metal nitride may be, for example, a two-dimensional metal nitride. The two-dimensional metal nitride may be represented by, for example, Mₙ₊₁ NₙTₓ (M is a transition metal, T is a terminal group, T is O, OH and/or F, n = 1, 2, or 3, and x is the number of terminal groups). The surface of the two-dimensional metal nitride may be terminated by O, OH, and/or F.

The composite of Li₂S, carbon, and a metal nitride may include carbon and a metal nitride. For details of the carbon, refer to the composite of Li₂S and carbon described above. For details of the metal carbide, refer to the composite of Li₂S and a metal nitride described above.

The Li₂S-containing composite may further include, for example, a second fibrous sulfide-based solid electrolyte. The Li₂S-containing composite may be a composite of Li₂S and a second fibrous sulfide-based solid electrolyte, a composite of Li₂S, a second fibrous sulfide-based solid electrolyte, or any one of the carbon, solid electrolytes, lithium salts, metal carbides, or metal nitrides described above. The cathode layer may further include, for example, a first fibrous sulfide-based solid electrolyte.

Further inclusion of a second fibrous sulfide-based solid electrolyte in the Li₂S-containing composite may further suppress or reduce deterioration of a lithium battery and further improve cycling performance of the lithium battery. A size of the second fibrous sulfide-based solid electrolyte may be smaller than a size of the first fibrous sulfide-based solid electrolyte. A length and/or thickness of the second fibrous sulfide-based solid electrolyte may be about 50 % or less, about 40 % or less, about 30 % or less, about 20 % or less, or about 10 % or less, with respect to the length and/or thickness of the first fibrous sulfide-based solid electrolyte, respectively. The length and/or thickness of the second fibrous sulfide-based solid electrolyte may be about 0.1 % to about 50 %, about 0.5 % to about 40 %, about 1 % to about 30 %, about 1 % to about 20 %, or about 1 % to about 10 %, with respect to the length and/or thickness of the first fibrous sulfide-based solid electrolyte, respectively. The second fibrous sulfide-based solid electrolyte may have the same shape as, but a smaller size than the first fibrous sulfide-based solid electrolyte. If (e.g., when) the second fibrous sulfide-based solid electrolyte has such a reduced length and/or thickness, distribution within a Li₂S-containing composite may be more easily achieved. If (e.g., when) the second fibrous sulfide-based solid electrolyte has such a reduced length and/or thickness, deterioration of a lithium battery may be further suppressed or reduced, and cycling performance of the lithium battery may further improve.

The size of the sulfide-based cathode active material may be, for example, about 0.1 µm to about 50 µm, about 0.5 µm to about 30 µm, about 0.5 µm to about 20 µm, or about 1 µm to about 10 µm. The size of Li₂S may be, for example, about 1 nm to about 10 µm, about 10 nm to about 5 µm, about 10 nm to about 3 µm, or about 10 nm to about 1 µm. The size of the Li₂S-containing composite may be, for example, about 0.1 µm to about 50 µm, about 0.5 µm to about 30 µm, about 0.5 µm to about 20 µm, or about 1 µm to about 10 µm.

The form of the cathode active material may have a particulate form, such as a relatively perfect sphere shape, an oval sphere shape, and/or the like. The particle diameter of the cathode active material is not limited and may be within a range that is applicable to a cathode active material of a comparable all-solid secondary battery. The content (e.g., amount) of the cathode active material in the cathode layer 10 is not limited and may be within a range applicable to a cathode layer of a comparable all-solid secondary battery. The content (e.g., amount) of the cathode active material included in a cathode active material layer 12 may be, for example, about 10 wt% to about 99 wt%, about 10 wt% to about 90 wt%, about 10 wt% to about 80 wt%, about 10 wt% to about 70 wt%, or about 10 wt% to about 50 wt%, with respect to a total weight of the cathode active material layer 12.

### Cathode Layer: Solid Electrolyte

The cathode active material layer 12 may further include, for example, a solid electrolyte. The solid electrolyte may be a sulfide-based solid electrolyte, for example. The solid electrolyte included in the cathode layer 10 may be identical to or different from a solid electrolyte included in the solid electrolyte layer 30. For details of the solid electrolyte, refer to the description of the solid electrolyte layer 30.

The solid electrolyte included in the cathode active material layer 12 may (e.g., be in a form of particles that) have a smaller median particle diameter D50 than that of the solid electrolyte included in the solid electrolyte layer 30 (e.g., be in a form of particles). For example, the median particle diameter D50 of the solid electrolyte included in the cathode active material layer 12 may be about 90% or less, about 80% or less, about 70% or less, about 60% or less, about 50% or less, about 40% or less, about 30% or less, or about 20% or less, with respect to the median particle diameter D50 of the solid electrolyte included in the solid electrolyte layer 30. D50 average particle diameter may be, for example, a median particle diameter (D50). Median particle diameter (D50) may refer to a particle size corresponding to a cumulative volume of about 50 vol% as counted from the smallest particle size in a particle size distribution measured by a laser diffraction method.

For example, the content (e.g., amount) of the solid electrolyte included in the cathode active material layer 12 may be about 1 wt% to about 40 wt%, about 1 wt% to about 30 wt%, about 1 wt% to about 20 wt%, or about 1 wt% to about 10 wt%, with respect to a total weight of the cathode active material layer 12.

### Cathode Layer: Conductive Material

The cathode active material layer 12 may further include a conductive material. The conductive material may be, for example, a carbon-based conductive material, a metal-based conductive material, or a combination thereof. Examples of the carbon-based conductive material may include graphite, carbon black, acetylene black, Ketjen black, carbon fibers, and a combination thereof. However, the carbon-based conductive material is not limited to the aforementioned examples and may be any material available as a carbon-based conductive material in the art. The metal-based conductive material may be metal powder, metal fibers, or a combination thereof, but without being limited thereto, may any metal-based conductive material available in the art. For example, the content (e.g., amount) of the conductive material included in the cathode active material layer 12 may be about 1 wt% to about 30 wt%, about 1 wt% to about 20 wt%, about 1 wt% to about 10 wt%, with respect to a total weight of the cathode active material layer 12.

### Cathode Layer: Binder

The cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, may utilize any material utilized as a binder in the art. The content (e.g., amount) of the binder included in the cathode active material layer 12 may be, for example, about 1 wt% to about 10 wt% with respect to a total weight of the cathode active material layer 12. The binder may not be provided.

### Cathode Layer: Other Additives

The cathode active material layer 12 may further include, for example, an additive such as a filler, a coating agent, a dispersing agent, and an ionically conductive aid, in addition to the cathode active material, the solid electrolyte, the binder, and the conductive material described above.

For the filler, coating agent, dispersing agent, and ionically conductive aid that may be included in the cathode active material layer 12, any suitable material generally utilized in an electrode of an all-solid secondary battery may be utilized.

### Dry Cathode: Cathode Current Collector

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. The cathode current collector 11 may have a thickness of, for example, about 1 µm to about 100 µm, about 1 µm to about 50 µm, about 5 µm to about 25 µm, or about 10 µm to about 20 µm.

For example, the cathode current collector 11 may include a base film, and a metal layer disposed on one surface or opposite surfaces of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. For example, the base film may be an insulator. As the base film includes an insulating thermoplastic polymer, in the event of a short circuit, the base film is softened or liquefied, blocking the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the cathode current collector 11 decrease, and therefore, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip and the metal of the metal layer may be a flake of the same material. For example, the metal chip may be a metal foil, a metal mesh, and/or the like. For example, the metal chip may be an aluminum foil, a copper foil, an SUS foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 µm to about 50 µm, about 1.5 µm to about 50 µm, about 1.5 µm to about 40 µm, or about 1 µm to about 30 µm. With the base film having a thickness within the aforementioned ranges, the weight of the electrode assembly may be more effectively reduced. For example, the base film may have a melting point of about 100 °C to about 300 °C, about 100 °C to about 250 °C or less, or about 100 °C to about 200 °C. If (e.g., when) the base film has a melting point within the aforementioned ranges, the base film may easily melt and be bonded to the lead-tab while welding the lead-tab. To improve adhesion between the base film and the metal layer, a surface treatment such as corona treatment may be performed on the base film. For example, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the aforementioned ranges, the electrode assembly may provide stability while maintaining conductivity. For example, the metal chip may have a thickness of about 2 µm to about 10 µm, about 2 µm to about 7 µm, or about 4 µm to about 6 µm. With the metal chip having a thickness within the aforementioned ranges, the metal layer and the lead-tab may be more easily connected. If (e.g., when) the cathode current collector 11 has the above structure, the weight of the cathode may be reduced, and consequently, the energy density of the cathode and the all-solid secondary battery may improve.

### Cathode Layer: First Inactive Member

Referring to FIGS. 4 and 5 and FIGS. 8 to 12, the all-solid secondary battery 1 may further include a first inactive member 40, 40a, 40b disposed on at least one of the opposite surface to the one surface of the anode current collector 21 or the opposite surface to the one surface of the cathode current collector 11.

For details of the first inactive member 40a, 40a, 40b, refer to the first inactive member 40a, 40a, 40b of the anode layer described above.

### Cathode Layer: Second Inactive Member

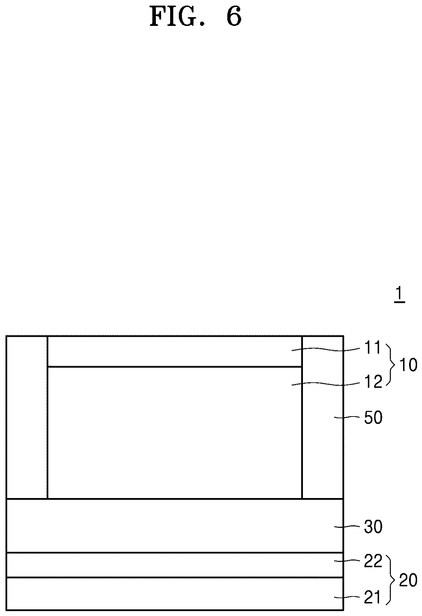

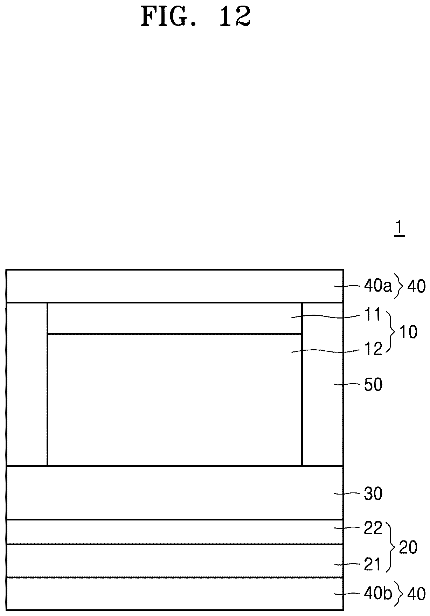

Referring to FIGS. 6 and 12, the cathode layer 10 may include a cathode current collector 11 and a cathode active material layer 12 disposed on at least one surface (e.g., one or both (e.g., opposite) surfaces) of the cathode current collector 11. A second inactive member 50 may be disposed on at least one side surface (e.g., one or both (e.g., opposite) side surfaces) of the cathode layer 10.

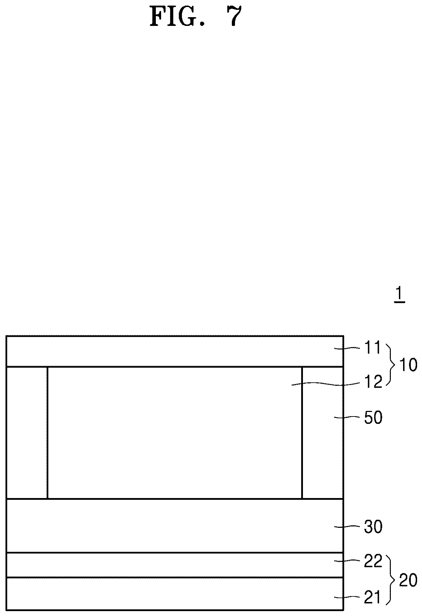

Referring to FIGS. 7, 9, and 11, the second inactive member 50 may be disposed on at least one side surface (e.g., one or both (e.g., opposite) side surfaces) of the cathode active material layer 12 and disposed between the solid electrolyte layer 30 and the cathode current collector 11 opposing the solid electrolyte layer 30. The second inactive member 50 may not be disposed on one side surface (e.g., right side and/or left side) of the cathode current collector 11. Referring to FIGS. 6, 8, 10, and 12, the second inactive member 50 may be disposed on at least one side surface (e.g., one or both (e.g., opposite) side surfaces) of the cathode current collector 11 and the cathode active material layer 12. Because including the first inactive member 40, 40a, 40b prevents crack formation in the solid electrolyte layer 30 at the time of manufacturing and/or during charging and discharging of an all-solid secondary battery 1, improved cycling performance of the all-solid secondary battery 1 may be achieved. In an all-solid secondary battery 1 that does not include the second inactive member 50, substantially non-uniform pressure may be applied to the solid electrolyte layer 30 that is in contact with the cathode layer 10 during manufacturing and/or charging and discharging of the all-solid secondary battery 1, giving rise to crack formation in the solid electrolyte layer 30 and subsequently, growth of lithium metal, and as a result, the likelihood of a short circuit occurring may increase.

Referring to FIGS. 6 to 12, in the all-solid secondary battery 1, a thickness of the second inactive member 50 may be, for example, more than a thickness of the first anode active material layer 22. For example, a thickness of the second inactive member 50 may be more than a thickness of the solid electrolyte layer 30.

Referring to FIGS. 6 to 12, the second inactive member 50 may be in contact with the solid electrolyte layer 30 while around (e.g., surrounding) a side surface of the cathode layer 10. If (e.g., when) the second inactive member 50 is in contact with the solid electrolyte layer 30 while around (e.g., surrounding) a side surface of the cathode layer 10, crack formation in the solid electrolyte layer 30 that is not in contact with the cathode layer 10, which may be caused by a pressure difference during a press process, may be effectively prevented or reduced. The second inactive member 50, while around (e.g., surrounding) a side surface of the cathode layer 10, may be apart from the anode layer 20, for example, from a first anode active material layer 22. The second inactive member 50 may be, while around (e.g., surrounding) a side surface of the cathode layer 10, in contact with the solid electrolyte layer 30 and apart from the anode layer 20. In some embodiments, the likelihood of a short circuit occurring due to the cathode layer 10 and a first anode active material layer 22 coming into physical contact with each other, and/or the likelihood of a short circuit occurring due to overcharging of lithium, etc. may then be reduced. If (e.g., when) the second inactive member 50 is disposed on both (e.g., simultaneously) one side surface of the cathode current collector 11 and the cathode active material layer 12, the likelihood of a short circuit occurring due to the cathode current collector 11 and the anode layer 20 coming in contact with each other may be more effectively suppressed or reduced.

Referring to FIGS. 6 to 12, a second inactive member 50 may extend from at least one side surface (e.g., one or both (e.g., opposite) side surfaces) of a cathode layer 30 to an end portion of a solid electrolyte layer 30. Because the second inactive member 50 extends to the end portion of the solid electrolyte layer 30, crack formation in the end portion of the solid electrolyte layer 30 may be suppressed or reduced. The end portion of the solid electrolyte layer 30 may be an outermost portion that is in contact with a side surface of the solid electrolyte layer 30. The second inactive member 50 may extend to an outermost portion that is in contact with a side surface of the solid electrolyte layer 30. The second inactive member 50 may be apart from the anode layer 20, for example, from the first anode active material layer 22. The second inactive member 50 may extend to the end portion of the solid electrolyte layer 30, but may not come in contact with the anode layer 20. For example, the second inactive member 50 may fill a space that is between one side surface of the cathode layer 30 and an end portion of the solid electrolyte layer 30.

The surface area of the cathode active material layer 12 or the cathode layer 10 may be less than the surface area of the first anode active material layer 22 or the anode layer 20. The surface area of the cathode active material layer 12 or the cathode layer 10 may be less than the surface area of the solid electrolyte layer 30.

The second inactive member 50 may be, for example, a gasket. If (e.g., when) a gasket is utilized as the second inactive member 50, crack formation in the solid electrolyte layer 30 due to a pressure difference during a press process may be effectively suppressed or reduced.

For example, the second inactive member 50 may have a monolayer structure. In other embodiments, the second inactive member 50 may have a multilayer structure. The multilayer structure may have, for example, a two-layer, three-layer, or four-layer structure, and having such a multilayer structure may allow more precise control on physical properties of the second inactive member 50.

In some embodiments, part or all of the second inactive member 50 may be arranged to be spaced (e.g., spaced and/or apart) from a side surface of the cathode active material layer 12. If (e.g., when) part or all of the second inactive member 50 is arranged to be spaced from a side surface of the cathode active material layer 12, the manufacturing process of an all-solid secondary battery 1 may be further facilitated, and the manufacturing speed of the all-solid secondary battery 1 may increase. If (e.g., when) part or all of the second inactive member 50 is arranged to be spaced from a side surface of the cathode active material layer 12, volume changes towards the side surface of the cathode active material layer 12 during charging and discharging may be more effectively accommodated, further improving lifespan characteristics of the all-solid secondary battery 1. The distance between the second inactive member 50 and the side surface of the cathode active material layer 12 may each independently be, for example, about 0.1 µm to about 10 mm, about 1 µm to about 1 mm, about 1 µm to about 500 µm, about 1 µm to about 100 µm, about 1 µm to about 50 µm, or about 1 µm to about 10 µm.

Referring to FIGS. 1 to 12, the second inactive member 50 may be selected from, for example, materials utilized in the first inactive member 40, 40a, 40b described above. The second inactive member 50 may not contain, for example, an electrode active material. The second inactive member 50 may be, for example, a flameretardant inactive member, an electronically-insulating inactive member, an ionicallyinsulating inactive member, or an elastic inactive member.

### Solid Electrolyte Layer

### Solid Electrolyte Layer: Solid Electrolyte

Referring to FIGS. 1 to 12, the solid electrolyte layer 30 may include a solid electrolyte layer disposed between the cathode layer 10 and the anode layer 20. The solid electrolyte layer may include, for example, a solid electrolyte, or a combination of a solid electrolyte and a gel electrolyte.

Examples of the solid electrolyte may include a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may be, for example, one or more selected from among Li₂S-P₂S₅, Li₂S-P₂S₅-LiX wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ wherein m and n each are a positive number, and Z is Ge, Zn or Ga, Li₂S-GeS₂, Li₂S-SiS₂-Li₃PO₄, Li₂S-SiS₂-LiₚMO_{q} wherein p and q each are a positive number and M is P, Si, Ge, B, Al, Ga or In, Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2. The sulfide-based solid electrolyte may be prepared by treating starting materials, such as Li₂S and P₂S₅, by a method such as melt-quenching, mechanical milling, and/or the like. In some embodiments, following such a treatment, heat treatment may be conducted. The sulfide-based solid electrolyte may be amorphous or crystalline, or may be in a mixed state thereof. In some embodiments, the solid electrolyte may be, among the sulfide-based solid electrolyte materials described herein, a material that contains at least sulfur (S), phosphorus (P), and lithium (Li), as its constitutive elements. For example, the solid electrolyte may be a material including Li₂S-P₂S₅. If (e.g., when) a sulfide-based solid electrolyte material utilized to form the solid electrolyte contains Li₂S-P₂S₅, the mixing molar ratio of Li₂S : P₂S₅ may be in a range of, for example, about 20 : 80 to about 90 : 10, about 25 : 75 to about 90 : 10, about 30 : 70 to about 70: 30, or about 40: 60 to about 60: 40.

For example, the sulfide-based solid electrolyte may include an argyrodite-type or kind (e.g., argyrodite) solid electrolyte represented by Formula 1A:

Formula 1A Li⁺₁₂₋ₙ₋ₓAⁿ⁺X²⁻₆₋ₓY⁻ₓ

In Formula 1A, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, and 1≤n≤5 and 0≤x≤2 may be satisfied. For example, the sulfide-based solid electrolyte may be an argyrodite-type or kind (e.g., argyrodite) compound including one or more selected from among Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2. For example, the sulfide-based solid electrolyte may be an argyrodite-type or kind (e.g., argyrodite) compound including at least one selected from among Li₆PS₅Cl, Li₆PS₅Br, and Li₆PS₅I.

An argyrodite-type or kind (e.g., argyrodite) solid electrolyte may have a density of about 1.5 g/cc to about 2.0 g/cc. If (e.g., when) the argyrodite-type or kind (e.g., argyrodite) solid electrolyte has a density of about 1.5 g/cc or more, an internal resistance of an all-solid secondary battery may be reduced, and Li penetration to the solid electrolyte layer may be more effectively suppressed or reduced.

The oxide-based all-solid electrolyte may be, for example, Li_{1+x+y}AlₓTi₂₋ₓSi_{y}P_{3-y}O₁₂ (0<x<2 and 0≤y<3), BaTiO₃, Pb(Zr,Ti)O₃ (PZT), Pb₁₋ₓLaₓZr_{1-y} Ti_{y}O₃ (PLZT) (0≤x<1 and 0≤y<1 ), PB(Mg₃Nb_{2/3})O₃-PbTiO₃ (PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and 0≤x≤10), or a combination thereof. The oxide-based solid electrolyte is produced, for example, by a sintering method and/or the like.

For example, the oxide-based solid electrolyte may be a garnet-type or kind (e.g., garnet) solid electrolyte selected from among Li₇La₃Zr₂O₁₂ (LLZO) and Li₃₊ₓLa₃Zr₂₋ₐMₐO₁₂ (M doped LLZO, M=Ga, W, Nb, Ta, or Al, and 0<a<2 and 0≤x≤10).

For example, the polymer solid electrolyte may include a mixture of a lithium salt and a polymer, or may include a polymer having an ion-conducting functional group. For example, the polymer solid electrolyte may be a polymer electrolyte that is in a solid state at about 25 °C and about 1 atm. For example, the polymer solid electrolyte may not contain liquid. The polymer solid electrolyte may include a polymer, and the polymer may be, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof. However, the polymer is not limited to the aforementioned examples and may be any material utilized in polymer electrolytes in the art. The lithium salt may be any lithium salt available in the art. The lithium salt may be, for example, LiPF₆, LiBF₄, LiSbF₆, LiAsF₆, LiClO₄, LiCFsSOs, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of about 1,000 Dalton or more, about 10,000 Dalton or more, about 100,000 Dalton or more, or about 1,000,000 Dalton or more.

For example, the gel electrolyte may be a polymer gel electrolyte. For example, the gel electrolyte may have a gel state while not containing a polymer.

For example, the polymer gel electrolyte may include a liquid electrolyte and a polymer, or an organic solvent and a polymer having an ion-conducting functional group. For example, the polymer gel electrolyte may be a polymer electrolyte that is in a gel state at about 25 °C and about 1 atm. For example, the polymer gel electrolyte may have a gel state without containing liquid. The liquid electrolyte utilized in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in solid polymer electrolytes. The organic solvent may be selected from among organic solvents utilized in liquid electrolytes. The lithium salt may be selected from among lithium salts utilized in polymer solid electrolytes. The ionic liquid may refer to a room-temperature molten salt or a salt that is in a liquid state at room temperature, which only includes (e.g., consists of) ions and has a melting point of room temperature or lower. For example, the ionic liquid may be at least one selected from among compounds containing: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻; BF₄⁻, SO₄⁻, CF₃SO₃⁻, (FSO₂)₂N-, (C₂F₅SO₂)₂N⁻, (C₂F₅SO₂)(CF₃SO₂)N⁻, and (CF₃SO₂)₂N⁻. For example, the polymer solid electrolyte may form a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of about 500 Dalton or more, about 1,000 Dalton or more, about 10,000 Dalton or more, about 100,000 Dalton or more, or about 1,000,000 Dalton or more.

### Solid Electrolyte Layer: Binder

The solid electrolyte layer 30 may further include, for example, a binder. The binder included in the solid electrolyte layer 30 may be, for example, styrene butadiene rubber (SBR), polytetrafluoroethylene, polyvinylidene fluoride, polyethylene, and/or the like, but without being limited to the aforementioned examples, may utilize any binder available in the art. The binder in the solid electrolyte layer 30 may be identical to or different from a binder included in the cathode active material layer 12 and the anode active material layer 22. The binder may not be provided.

The content (e.g., amount) of the binder included in the solid electrolyte layer 30 may be, about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt%, with respect to a total weight of the solid electrolyte layer 30.

The present disclosure will be described in greater detail through the following examples and comparative examples. However, it will be understood that the examples are provided only to illustrate the present disclosure and not to be construed as limiting the scope of the present disclosure.

### Preparation of Composite Anode Active Materials

### Preparation Example 1: Silica-Containing Composite Anode Active Material, Silica content (e.g., amount) 40 wt%

SiO₂ particles (average particle diameter: about 15 nm) were loaded into a reactor, and with CH₄ being supplied into the reactor at 300 sccm (standard cubic centimeters per minute) and 1 atm for about 30 minutes, the temperature inside the reactor was elevated to 1,000 °C.

Subsequently, a heat treatment was performed while maintaining the above temperature for about 7 hours. Then, the temperature inside the reactor was adjusted to room temperature (about 20 °C to about 25 °C) to obtain a composite anode active material in which SiO₂ particles and a reduction product thereof, SiO_{y} (0<y<2) particles, are embedded in graphene.

In the composite anode active material, the content (e.g., amount) of silica and reduction products thereof was about 40 wt% of the total weight of the composite anode active material.

### Preparation Example 2: Silica-Containing Composite Anode Active Material, Silica Content 60 wt%

A composite anode active material was prepared following the same process as Preparation Example 1, except that the silica content (e.g., amount) was changed to about 60 wt% with respect to a total weight of the composite anode active material.

### Preparation Example 3: Silica-Containing Composite Anode Active Material, Silica Content 20 wt%

A composite anode active material was prepared following the same process as Preparation Example 1, except that the silica content (e.g., amount) was changed to about 20 wt% with respect to a total weight of the composite anode active material.

### Comparative Preparation Example 1: Alumina-Containing Composite Anode Active Material, Alumina Content 40 wt%

Al₂O₃ particles (average particle diameter: about 15 nm) were loaded into a reactor, and with CH₄ being supplied into the reactor at about 300 sccm and about 1 atm for about 30 minutes, the temperature inside the reactor was elevated to about 1,000 °C.

Subsequently, a heat treatment was performed while maintaining the above temperature for about 7 hours. Then, the temperature inside the reactor was adjusted to room temperature (about 20 °C to about 25 °C) to obtain a composite anode active material in which Al₂O₃ particles and a reduction product thereof, Al₂O_{z} (0<z<3) particles, are embedded in graphene. In the composite anode active material, the content (e.g., amount) of alumina and reduction products thereof was about 40 wt% of the total weight of the composite anode active material.

### Preparation of sulfide-based composite cathode active material

### Preparation Example 4: Li₂S-LiI-CNF Composite Cathode Active Material

Li₂S and LiI were mixed in a weight ratio of about 30 : 20. The resulting mixture was mechanically milled utilizing a ball mill, to produce a Li₂S-LiI composite. The milling conditions were for about 10 hours at about 25 °C, and at about 510 rpm.

The Li₂S-LiI composite and carbon nanofibers (CNFs) were mixed in a weight ratio of about 50 : 10. A Li₂S-LiI-CNF composite was prepared by mechanically milling the mixture utilizing a ball mill. The milling conditions were for about 10 hours at about 25 °C, and at about 510 rpm. The Li₂S-LiI-CNF composite was utilized as a composite cathode active material.

### Preparation of All-Solid Secondary Battery

### Example 1: Elastic Sheet (50 µm)/Cathode Layer (112 µm, NCA)/Solid Electrolyte Layer (30 µm)/Anode Layer (37 µm, Silica Composite, Silica Content 40 wt%)

### Preparation of Cathode Layer

LiNi_{0.}8Co0.15Al0.05O2 (NCM) coated with Li2O-ZrO2 (LZO) was prepared as a cathode active material. The LZO-coated cathode active material was prepared following the method disclosed in Korean Patent No. 10-2016-0064942. As a solid electrolyte, argyrodite-type or kind (e.g., argyrodite) Li6PS5Cl crystals (D50=0.5 µm, crystalline) were prepared. As a binder, a polytetrafluoroethylene (PTFE) binder was prepared. As a conductive material, CNFs were prepared. These materials were mixed at a weight ratio of cathode active material: solid electrolyte : conductive material = about 84 : 11 : 3 : 2 with xylene as solvent to form a slurry, and the resulting slurry was molded into a sheet form, and the resulting sheet was vacuum-dried at about 40 °C for about 8 hours to prepare a cathode sheet. Using a cathode current collector formed of an aluminum foil coated with a carbon layer, the prepared cathode sheet was placed on the carbon layer and subjected to a heated roll-press at about 85 °C to produce a cathode layer. The total thickness of the cathode layer was about 112 µm. The thickness of the cathode active material layer was about 92 µm, and the thickness of the carbon-coated aluminum foil was about 20 µm.

### Preparation of Anode

As an anode current collector, a 10 µm-thick SUS foil was prepared. The composite anode active material prepared in Preparation Example 1 was prepared as an anode active material.

About 4 g of composite anode active material powder were placed in a vessel, and about 4 g of an NMP solution containing about 7 wt% of a PVDF binder (Kureha, #9300) were added thereto to prepare a mixture solution. The prepared mixed solution was stirred while adding NMP in small amounts to the mixed solution, to produce a slurry. The produced slurry was applied onto a SUS substrate by utilizing a bar coater, and then dried in open air at about 80 °C for about 10 minutes, and vacuum-dried at about 40 °C for about 10 hours to prepare a laminate. The prepared laminate was cold roll-pressed to flatten the surface thereof, to prepare an anode having the first anode active material layer/anode current collector structure. The thickness of the first anode active material layer was about 27 µm.

The ratio B/A of initial charge capacity B of the first anode active material layer to initial charge capacity A of the cathode active material layer was less than about 1. The initial charge capacity of the cathode active material layer was determined by charging from a 1^{st} open circuit voltage to about 4.25 V vs. Li/Li⁺. The initial charge capacity of the first anode active material layer was determined by charging from a 2^{nd} open circuit voltage to about 0.01 V vs. Li/Li⁺. An initial charge capacity of the cathode layer (i.e., cathode active material layer) and an initial charge capacity of the anode layer (i.e., first anode active material layer) was measured by the half-cell as described above, respectively.

### Preparation of Solid Electrolyte Layer

To argyrodite-type or kind (e.g., argyrodite) crystals, Li₆PS₅Cl solid electrolyte (D50=3.0 µm, crystalline), about 1.5 parts by weight of an acryl-based binder with respect to about 98.5 parts by weight of the solid electrolyte was added, to prepare a mixture. The prepared mixture was stirred while adding octyl acetate thereto, to prepare a slurry. The prepared slurry was applied onto a nonwoven fabric placed on a PET substrate by utilizing a bar coater, and dried in air at about 80 °C for about 10 minutes to prepare a laminate. The prepared laminate was vacuum-dried at a temperature of about 80 °C for about 2 hours to prepare a solid electrolyte layer.

### Inactive Member: Elastic Sheet

An about 50 µm-thick porous polyurethane foam sheet was prepared as an elastic sheet.

### Preparation of All-Solid Secondary Battery

A solid electrolyte layer was placed on an anode such that a first anode active material layer was in contact with the solid electrolyte layer, and a cathode was placed on the solid electrolyte layer such that a cathode active material layer was in contact with the solid electrolyte layer, to prepare a laminate.

The prepared laminate was plate-pressed with a pressure of about 500 MPa at about 85 °C for about 30 minutes. By such a press treatment, the solid electrolyte layer was sintered, resulting in the improvement of the battery performance. The thickness of the sintered solid electrolyte layer was about 30 µm. The density of the argyrodite-type or kind (e.g., argyrodite) crystal Li₆PS₅Cl solid electrolyte included in the sintered solid electrolyte layer was about 1.6 g/cc. The surface area of the solid electrolyte layer was the same as the surface area of the anode. An elastic sheet was additionally placed on the cathode current collector of the pressed laminate.

The laminate further including the elastic sheet was then placed in a pouch and vacuum-sealed, to produce an all-solid secondary battery. A part of the cathode current collector and a part of the anode current collector were extended out of the sealed battery and utilized as a cathode terminal and an anode terminal, respectively.

### Example 2: Elastic Sheet (50 µm)/Cathode Layer (112 µm, NCA)/Solid Electrolyte Layer (30 µm)/Anode Layer (37 µm, Silica Composite, Silica Content 60 Wt%)

An all-solid secondary battery was prepared following the same process as in Example 1, except that the composite anode active material prepared in Preparation Example 2 was utilized as the anode active material.

### Example 3: Elastic Sheet (50 µm)/Cathode Layer (112 µm, NCA)/Solid Electrolyte Layer (30 µm)/Anode Layer (37 µm, Silica Composite, Silica Content 20 Wt%)

An all-solid secondary battery was prepared following the same process as in Example 1, except that the composite anode active material prepared in Preparation Example 3 was utilized as the anode active material.

### Comparative Example 1: Elastic Sheet (50 µm)/Cathode Layer (112 µm, NCA)/Solid Electrolyte Layer (30 µm)/Anode Layer (37 µm, Alumina Composite, Alumina Content 40 wt%)

An all-solid secondary battery was prepared following the same process as in Example 1, except that the composite anode active material prepared in Comparative Preparation Example 1 was utilized as a composite anode active material.

### Comparative Example 2: Elastic Sheet (50 µm)/Cathode Layer (112 µm, NCA)/Solid Electrolyte Layer (30 µm)/Anode Layer (37 µm, SiO₂+Graphene Mixture, Alumina Content 40 wt%)

An all-solid secondary battery was prepared following in substantially the same process as Example 1, except that instead of the composite anode active material prepared in Preparation Example 1, a mixture containing SiO₂ particles (average particle diameter: about 15 nm) and graphene was utilized as the anode active material.

The content (e.g., amount) of SiO₂ particles was 40 wt% of the total weight of the mixture.

### Reference Example 1: Elastic Sheet (100 µm)/Cathode Layer (112 µm, NCA)/Solid Electrolyte Layer (30 µm)/Anode Layer (17 µm, Ag-C)

An all-solid secondary battery was prepared following the same process as Example 1, except that instead of the composite anode active material prepared in Preparation Example 1, a mixture containing carbon black (CB) having a primary particle diameter of about 30 nm and silver (Ag) particles having an average particle diameter of about 60 nm in a weight ratio of about 3:1 was utilized as the anode active material, the thickness of the anode active material layer was changed to about 7 µm, and the thickness of the elastic sheet was changed to about 100 µm. The thickness of the anode layer was the total thickness of the anode current collector and the anode active material layer.

### Example 4: Cathode Layer (113.8 µm, Li₂S-LiI-CNF)/Solid Electrolyte Layer (30 µm)/Anode Layer (37 µm, Silica Composite, Silica Content 40 wt%)

An all-solid secondary battery was prepared following the same process as Example 1, except that the cathode, described herein that contains a sulfide-based cathode active material was utilized, and the elastic sheet was not provided.

### Preparation of Cathode

As a cathode active material, the Li₂S-LiI-CNF composite prepared in Example 4 was prepared. As a solid electrolyte, argyrodite-type or kind Li6PS5Cl crystals (D50=3.0 µm, crystalline) were prepared. PTFE was prepared as a binder. The aforementioned materials were mixed in a weight ratio of composite cathode active material: solid electrolyte : binder = about 60 : 40 : 1.2 to prepare a cathode mixture. The cathode mixture was obtained by mixing, utilizing a ball mill.

The cathode mixture was placed on one surface of a cathode current collector made of an aluminum foil carbon-coated on one surface thereof, and was plate-pressed for about 10 minutes with a pressure of about 200 MPa to produce a cathode. The total thickness of the cathode layer was about 113.8 µm. The thickness of the cathode active material layer was about 93.8 µm, and the thickness of the carbon-coated aluminum foil was about 20 µm.

### Example 5: Elastic Sheet (50 µm)/Cathode Layer (112 µm, NCA)/Solid Electrolyte Layer (30 µm)/Anode Layer (37 µm, Silica Composite, Silica Content 60 Wt%)

An all-solid secondary battery was prepared following the same process as in Example 5, except that the composite anode active material prepared in Preparation Example 2 was utilized as the anode active material.

### Example 6: Elastic Sheet (50 µm)/Cathode Layer (112 µm, NCA)/Solid Electrolyte Layer (30 µm)/Anode Layer (37 µm, Silica Composite, Silica Content 20 Wt%)

An all-solid secondary battery was prepared following the same process as in Example 5, except that the composite anode active material prepared in Preparation Example 3 was utilized as the anode active material.

### Comparative Example 3: Cathode Layer (113.8 µm, Li₂S-LiI-CNF)/Solid Electrolyte Layer (30 µm)/Anode Layer (37 µm, SiO₂+Graphene Mixture, Silica Content 40 Wt%)

An all-solid secondary battery was prepared following in substantially the same process as Example 5, except that instead of the composite anode active material prepared in Preparation Example 1, a mixture containing SiO₂ particles (average particle diameter: about 15 nm) and graphene was utilized as the anode active material.

The content (e.g., amount) of SiO₂ particles was about 40 wt% of the total weight of the mixture.

### Reference Example 2: Elastic Sheet (50 µm)/Cathode Layer (113.8 µm, Li₂S-Lii-CNF)/Solid Electrolyte Layer (30 µm)/Anode Layer (17 µm, Ag-C)

An all-solid secondary battery was prepared following the same process as Example 5, except that instead of the composite anode active material prepared in Preparation Example 1, a mixture containing carbon black (CB) having a primary particle diameter of about 30 nm and silver (Ag) particles having an average particle diameter of about 60 nm in a weight ratio of about 3:1 was utilized as the anode active material, the thickness of the anode active material layer was changed to about 7 µm, and an about 50 µm-thick elastic sheet was utilized. The thickness of the anode layer was the total thickness of the anode current collector and the anode active material layer.

### Evaluation Example 1: Evaluation of XPS Spectrum

During the process of preparation of the composite anode active material prepared in Preparation Example 1, x-ray photoelectron spectroscopy (XPS) spectra over time were measured utilizing a Quantum 2000 (Physical Electronics). XPS spectra of C 1s orbital and Si 2p orbital of each sample before temperature elevation, and at about 1 minute, about 5 minutes, about 30 minutes, about 1 hour, and about 4 hours after temperature elevation, were obtained. At the beginning of temperature elevation, the XPS spectrum only shows Si 2p peaks but does not show C 1s peaks. After about 30 minutes, C 1s peaks appeared clearly, and the size of Si 2p peaks was significantly reduced.

After about 30 minutes, C 1s peaks attributable to C-C bonds and C=C bonds due to growth of graphene appeared clearly around about 284.5 eV.

Because the oxidation number of silicon decreases as the reaction time increases, the peak position of the Si 2p orbital was shifted toward a lower binding energy (eV).

In some embodiments, it was found that as the reaction progressed, graphene was grown on the SiO₂ particles, and SiO_{y} (0<y<2), which is a reduction product of SiO₂, was produced.

An average content (e.g., amount) of carbon and an average content (e.g., amount) of aluminum were measured from XPS analysis results of 10 regions of a sample of the composite anode active material prepared in Preparation Example 2. From the measurement results, the deviation in silicon content (e.g., amount) of the respective regions was calculated. The deviation in silicon content (e.g., amount) was expressed as a percentage with respect to an average value, and this percentage was referred to as uniformity. The percent deviation of the aluminum content (e.g., amount) from the mean value, that is, uniformity of the aluminum content (e.g., amount), was about 1%. In some embodiments, it was found that silica was uniformly distributed in the composite anode active material prepared in Preparation Example 1.

### Evaluation Example 2: SEM, HR-TEM and SEM-EDAX Analyses

The composite anode active material prepared in Preparation Example 1 was analyzed by scanning electron microscopy, high-resolution transmission electron microscopy, and energy dispersive X-ray analysis (EDAX) analysis. For scanning electron microscopy with energy dispersive X-ray analysis (SEM-EDAX) analysis, a FEI Titan 80-300 of Philips Corporation was utilized.

The composite anode active material prepared in Preparation Example 1 shows a structure in which SiO₂ particles and a reduction product thereof, SiO_{y} (0<y<2) particles, are embedded in graphene. It was found that a graphene layer was disposed on the outside of at least one particle selected from among SiO₂ particles and SiO_{y} (0<y<2) particles. The at least one particle selected from among SiO₂ particles and SiO_{y} (0<y<2) particles were uniformly distributed within the graphene matrix. The at least one particle selected from among SiO₂ particles and SiO_{y} (0<y<2) particles was about 15 nm. The average particle diameter of the composite anode active material prepared in Preparation Example 1 was about 200 nm.

### Evaluation Example 3-1: Evaluation of Volume Change During Charging and Discharging (NCA Cathode Active Material)

Once the all-solid secondary batteries prepared in Example 1 and Reference Example 1 each underwent the charging step in the first cycle of the charge/discharge test of Evaluation Example 4, thickness changes were examined by measuring a cross-sectional scanning electron microscopy image of each all-solid secondary battery.

After the first cycle charging, a lithium metal layer was formed between the first anode active material layer and the anode current collector.

In the all-solid secondary battery of Example 1, the thickness of the lithium metal layer, which was formed between the first anode active material layer and the anode current collector after initial charging, was about 8 µm, which is smaller than the thickness (about 34 µm) of the first anode active material layer after charging.

The increase in the thickness of the all-solid secondary battery of Example 1 after initial charging was about 10 % or less with respect to the initial thickness of the all-solid secondary battery. Consequently, during the charging and discharging processes of the all-solid secondary battery of Example 1, the volume change was suppressed or reduced.

In the all-solid secondary battery of Example 1, an about 50 µm-thick elastic member was utilized to accommodate volume changes during charging and discharging. Consequently, the all-solid secondary battery had a slightly decreased energy density due to including the about 50 µm-thick elastic member.

In the all-solid secondary battery of Reference Example 1, the thickness of the lithium metal layer, which was formed between the first anode active material layer and the anode current collector after initial charging, was about 30 µm, which is greater than the thickness (about 7 µm) of the first anode active material layer after charging.

The increase in the thickness of the all-solid secondary battery of Reference Example 1 after initial charging was more than about 15 % with respect to the initial thickness of the all-solid secondary battery. Consequently, during the charging and discharging processes of the all-solid secondary battery of Reference Example 1, the volume change was significant.

In the all-solid secondary battery of Reference Example 1, an about 100 µm-thick elastic member was utilized to accommodate volume changes during charging and discharging. Consequently, the all-solid secondary battery had a further decreased energy density due to including the about 100 µm-thick elastic member.

### Evaluation Example 3-2: Evaluation of Volume Change During Charging and Discharging (Li₂S-Lii-CNF Cathode Active Material)

Once the all-solid secondary batteries prepared in Example 4 and Reference Example 2 each underwent the charging step in the first cycle of the charge/discharge test of Evaluation Example 4, thickness changes were examined by measuring a cross-sectional scanning electron microscopy image of each all-solid secondary battery.

After the first cycle charging, a lithium metal layer was formed between the first anode active material layer and the anode current collector.

In the all-solid secondary battery of Example 4, the thickness of the lithium metal layer, which was formed between the first anode active material layer and the anode current collector after initial charging, was about 8 µm, which is smaller than the thickness (about 34 µm) of the first anode active material layer after charging.

The increase in the thickness of the all-solid secondary battery of Example 4 after initial charging was about 5 % or less with respect to the initial thickness of the all-solid secondary battery. Consequently, during the charging and discharging processes of the all-solid secondary battery of Example 4, the volume change was insignificant.

In the all-solid secondary battery of Example 4, an elastic member for accommodating volume changes during charging and discharging was not utilized. Consequently, there was no decrease in energy density of the all-solid secondary battery by the elastic member.

In the all-solid secondary battery of Reference Example 2, the thickness of the lithium metal layer, which was formed between the first anode active material layer and the anode current collector after initial charging, was about 30 µm, which is greater than the thickness (about 7 µm) of the first anode active material layer.

The increase in the thickness of the all-solid secondary battery of Reference Example 2 after initial charging was more than about 10 % with respect to the initial thickness of the all-solid secondary battery. Consequently, during the charging and discharging processes of the all-solid secondary battery of Reference Example 2, the volume change was significant.

In the all-solid secondary battery of Reference Example 2, an about 50 µm-thick elastic member was utilized to accommodate an increased volume change during charging and discharging. Consequently, the all-solid secondary battery had a slightly decreased energy density due to including the about 50 µm-thick elastic member.

### Evaluation Example 4: Charge/Discharge Test

Charge-discharge characteristics of each of the all-solid secondary batteries prepared in Examples 1 to 3, Comparative Examples 1 and 2, and Reference Example 1 were evaluated by the following charge/discharge test. The charge/discharge test was performed with the all-solid secondary battery placed in a constant-temperature bath at about 45 °C.

In the first cycle, each battery was charged at a constant current of about 0.5 mA/cm² for about 12.5 hours until the battery voltage reached a voltage of about 3.9 V to about 4.25 V. Then, the battery was discharged at a constant current of about 0.5 mA/cm² for about 12.5 hours until the battery voltage reached about 2.5 V.

Charge-discharge characteristics of each of the all-solid secondary batteries prepared in Examples 4 to 6, Comparative Example 3, and Reference Example 2 were evaluated by the following charge/discharge test. The charge/discharge test was performed with the all-solid secondary battery placed in a constant-temperature bath at about 45 °C.

In the first cycle, each battery was charged at a constant current of about 0.1 C for about 12.5 hours until the battery voltage reached a voltage of about 2.5 V to about 2.8 V. Then, the battery was discharged at a constant current of about 0.1 C for about 12.5 hours until the battery voltage reached about 0.3 V.

The discharge capacity in the first cycle was utilized as a standard capacity.

After the second cycle, charging and discharging were performed up to about 500 cycles under the same conditions as the first cycle. The results of the measurement are shown in Table 1.

The cycle number refers to the number of cycles required for the discharge capacity to decrease to about 80 % of the standard capacity after the second cycle. The higher the cycle number, the better lifespan characteristics the battery is considered to have.

**[Table 1]**

| | Cycle number [times] |
|---|---|
| Example 1: Elastic Sheet (50 µm)/Cathode Layer (112 µm, NCA)/Solid Electrolyte Layer (30 µm)/Anode Layer (37 µm, Silica Composite, Silica Content 40 wt%) | 500 |
| Example 2: Elastic Sheet (50 µm)/Cathode Layer (112 µm, NCA)/Solid Electrolyte Layer (30 µm)/Anode Layer (37 µm, Silica Composite, Silica Content 60 wt%) | 415 |
| Example 3: Elastic Sheet (50 µm)/Cathode Layer (112 µm, NCA)/Solid Electrolyte Layer (30 µm)/Anode Layer (37 µm, Silica Composite, Silica Content 20 wt%) | 355 |
| Comparative Example 1: Elastic Sheet (50 µm)/Cathode Layer (112 µm, NCA)/Solid Electrolyte Layer (30 µm)/Anode Layer (37 µm, Alumina Composite, Alumina Content 40 wt%) | 235 |
| Comparative Example 2: Elastic Sheet (50 µm)/Cathode Layer (112 µm, NCA)/Solid Electrolyte Layer (30 µm)/Anode Layer (37 µm, SiO₂+Graphene Mixture, SiO₂ Content 40 wt%) | 155 |
| Reference Example 1: Elastic Sheet (100 µm)/Cathode Layer (112 µm, NCA)/Solid Electrolyte Layer (30 µm)/Anode Layer (17 µm, Ag-C) | 400 |
| Example 4: Cathode Layer (113.8 µm, Li₂S-LiI-CNF)/Solid Electrolyte Layer (30 µm)/Anode Layer (37 µm, Silica Composite, Silica Content 40 wt%) | 400 |
| Example 5: Cathode Layer (113.8 µm, Li₂S-LiI-CNF)/Solid Electrolyte Layer (30 µm)/Anode Layer (37 µm, Silica Composite, Silica Content 60 wt%) | 315 |
| Example 6: Cathode Layer (113.8 µm, Li₂S-LiI-CNF)/Solid Electrolyte Layer (30 µm)/Anode Layer (37 µm, Silica Composite, Silica Content 20 wt%) | 155 |
| Comparative Example 3: Cathode Layer (113.8 µm, Li₂S-LiI-CNF)/Solid Electrolyte Layer (30 µm)/Anode Layer (37 µm, SiO₂+Graphene Mixture, SiO₂ Content 40 wt%) | 89 |
| Reference Example 2: Elastic Sheet (50 µm)/Cathode Layer (113.8 µm, Li₂S-LiI-CNF)/Solid Electrolyte Layer (30 µm)/Anode Layer (17 µm, Ag-C) | 300 |

As shown in Table 1, the all-solid secondary batteries of Examples 1 to 3 show excellent or suitable lifespan characteristics, due to suppressed or reduced volume changes during charging and discharging, and suppressed or reduced agglomeration of metal oxides in the composite anode active materials.

It was considered that in the all-solid secondary battery of Comparative Example 1, the lifespan characteristics of the all-solid secondary battery were reduced as alumina reacted with lithium and was converted to other compounds.

The all-solid secondary batteries of Examples 1 to 3 show improved lifespan characteristics compared to the all-solid secondary battery of Comparative Example 2, which contained a simple mixture of the metal oxide and graphene, rather than a composite of the metal oxide and graphene.

In the all-solid secondary battery of Comparative Example 2, the deterioration in lifespan characteristics was considered to be due to irregularities in charging and discharging due to agglomeration of metal oxide nanoparticles and/or agglomeration of graphene.

The all-solid secondary batteries of Examples 4 to 6 showed excellent or suitable lifespan characteristics due to suppressed or reduced volume changes during charging and discharging, and suppressed or reduced agglomeration of metal oxides in the composite anode active materials.

The all-solid secondary batteries of Examples 4 to 6 show improved lifespan characteristics compared to the all-solid secondary battery of Comparative Example 3, which contained a simple mixture of the metal oxide and graphene, rather than a composite of the metal oxide and graphene.

In the all-solid secondary battery of Comparative Example 3, the deterioration in lifespan characteristics was considered to be due to irregularities in charging and discharging due to agglomeration of metal oxide nanoparticles and/or agglomeration of graphene. In the all-solid secondary batteries of Reference Examples 1 and 2, an energy density of the all-solid secondary batteries were decreased due to an addition of thick elastic sheet.

### Evaluation Example 5: Evaluation of High-Rate Capability

High-rate capability of each of the all-solid secondary batteries prepared in Examples 1 to 3, Comparative Examples 1 and 2, and Reference Example 1 was evaluated by the following charge/discharge test. The charge/discharge test was performed while the solid secondary battery was placed in a constant-temperature bath at about 45 °C.

The all-solid secondary batteries prepared in Examples 1 to 3, Comparative Examples 1 and 2, and Reference Example 1 were each charged at a constant current of about 0.1 C rate at about 45 °C until the battery voltage reached about 3.9 V (vs. Li) and then, while maintaining about 3.9 V in a constant voltage mode, the charging was cut-off at a current of about 0.05 C rate. Subsequently, the battery was discharged at a constant current of about 0.1 C rate until the battery voltage reached about 2.5 V (vs. Li) during discharge (formation cycle).

The all-solid secondary battery after the formation cycle was charged at about 45 °C at a constant current of about 0.2 C rate until the battery voltage reached about 3.9 V (vs. Li). Subsequently, the battery was discharged at a constant current of about 0.2 C rate until the battery voltage reached about 2.5 V (vs. Li) during discharge (1^{st} cycle).

The all-solid secondary battery after the 1^{st} cycle was charged at about 45 °C at a constant current of about 0.2 C rate until the battery voltage reached about 3.9 V (vs. Li). Subsequently, the battery was discharged at a constant current of about 0.33 C rate until the battery voltage reached about 2.5 V (vs. Li) during discharge (2^{nd} cycle).

The all-solid secondary battery after the 2nd cycle was charged at about 45 °C at a constant current of about 0.2 C rate until the battery voltage reached about 3.9 V (vs. Li). Subsequently, the battery was discharged at a constant current of about 0.5 C rate until the battery voltage reached about 2.5 V (vs. Li) during discharge (3^{rd} cycle).

The all-solid secondary battery after the 3^{rd} cycle was charged at about 45 °C at a constant current of about 0.2 C rate until the battery voltage reached about 3.9 V (vs. Li). Subsequently, the battery was discharged at a constant current of about 1.0 C rate until the battery voltage reached about 2.5 V (vs. Li) during discharge (4^{th} cycle).

Throughout the charge-discharge cycles above, a rest period of about 10 minutes was provided after each charge/discharge cycle. A part of the room-temperature charge/discharge test results is shown in Table 2. High-rate capability is defined by Equation 1.

The all-solid secondary batteries of Examples 4 to 6, Comparative Example 3, and Reference Example 2 were each evaluated for high-rate capability by the following charge/discharge test. The charge/discharge test was performed while the solid secondary battery was placed in a constant-temperature bath at about 45 °C.

The all-solid secondary batteries prepared in Examples 4 to 6, Comparative Example 3, and Reference Example 2 were each charged at a constant current of about 0.1 C rate at about 45 °C until the battery voltage reached about 2.5 V (vs. Li) and then, while maintaining about 2.5 V in a constant voltage mode, the charging was cut-off at a current of about 0.05 C rate. Subsequently, the battery was discharged at a constant current rate of about 0.1 C until the battery voltage reached about 0.3 V (vs. Li) during discharge (formation cycle).

The all-solid secondary battery after the formation cycle was charged at about 45 °C at a constant current of about 0.2 C rate until the battery voltage reached about 2.5 V (vs. Li). Subsequently, the battery was discharged at a constant current of about 0.2 C rate until the battery voltage reached about 0.3 V (vs. Li) during discharge (1st cycle).

The all-solid secondary battery after the 1st cycle was charged at about 45 °C at a constant current of about 0.2 C rate until the battery voltage reached about 2.5 V (vs. Li). Subsequently, the battery was discharged at a constant current of about 0.33 C rate until the battery voltage reached about 0.3 V (vs. Li) during discharge (2^{nd} cycle).

The lithium battery after the 2nd cycle was charged at about 45 °C at a constant current of about 0.2 C rate until the battery voltage reached about 2.5 V (vs. Li). Subsequently, the battery was discharged at a constant current of about 0.5 C rate until the battery voltage reached about 0.3 V (vs. Li) during discharge (3^{rd} cycle).

The lithium battery after the 3rd cycle was charged at about 45 °C at a constant current of about 0.2 C rate until the battery voltage reached about 2.5 V (vs. Li). Subsequently, the battery was discharged at a constant current of about 1.0 C rate until the battery voltage reached about 0.3 V (vs. Li) during discharge (4^{th} cycle).

Throughout the charge-discharge cycles above, a rest period of about 10 minutes was provided after each charge/discharge cycle. A part of the room-temperature charge/discharge test results is shown in Table 2. High-rate capability is defined by Equation 1. High-Rate Capability [%] = [Discharge Capacity in 4th Cycle / Discharge Capacity in Formation Cycle] × 100

**[Table 2]**

| | High-Rate Capability (1 C/0.1 C) [%] |
|---|---|
| Example 1: Elastic Sheet (50 µm)/Cathode Layer (112 µm, NCA)/Solid Electrolyte Layer (30 µm)/Anode Layer (37 µm, Silica Composite, Silica Content 40 wt%) | 92 |
| Example 2: Elastic Sheet (50 µm)/Cathode Layer (112 µm, NCA)/Solid Electrolyte Layer (30 µm)/Anode Layer (37 µm, Silica Composite, Silica Content 60 wt%) | 90 |
| Example 3: Elastic Sheet (50 µm)/Cathode Layer (112 µm, NCA)/Solid Electrolyte Layer (30 µm)/Anode Layer (37 µm, Silica Composite, Silica Content 20 wt%) | 88 |
| Comparative Example 1: Elastic Sheet (50 µm)/Cathode Layer (112 µm, NCA)/Solid Electrolyte Layer (30 µm)/Anode Layer (37 µm, Alumina Composite, Alumina content (e.g., amount) 40 wt%) | 82 |
| Comparative Example 2: Elastic Sheet (50 µm)/Cathode Layer (112 µm, NCA)/Solid Electrolyte Layer (30 µm)/Anode Layer (37 µm, SiO₂+Graphene Mixture, SiO₂ Content 40 wt%) | 72 |
| Reference Example 1: Elastic Sheet (100 µm)/Cathode Layer (112 µm, NCA)/Solid Electrolyte Layer (30 µm)/Anode Layer (17 µm, Ag-C) | 90 |
| Example 4: Cathode Layer (113.8 µm, Li₂S-LiI-CNF)/Solid Electrolyte Layer (30 µm)/Anode Layer (37 µm, Silica Composite, Silica Content 40 wt%) | 85 |
| Example 5: Cathode Layer (113.8 µm, Li₂S-LiI-CNF)/Solid Electrolyte Layer (30 µm)/Anode Layer (37 µm, Silica Composite, Silica Content 60 wt%) | 84 |
| Example 6: Cathode Layer (113.8 µm, Li₂S-LiI-CNF)/Solid Electrolyte Layer (30 µm)/Anode Layer (37 µm, Silica Composite, Silica Content 20 wt%) | 70 |
| Comparative Example 3: Cathode Layer (113.8 µm, Li₂S-LiI-CNF)/Solid Electrolyte Layer (30 µm)/Anode Layer (37 µm, SiO₂+Graphene Mixture, SiO₂ Content 40 wt%) | 62 |
| Reference Example 2: Elastic Sheet (50 µm)/Cathode Layer (113.8 µm, Li₂S-LiI-CNF)/Solid Electrolyte Layer (30 µm)/Anode Layer (17 µm, Ag-C) | 80 |

As shown in Table 2, the all-solid secondary batteries of Examples 1 to 3 each showed improved high-rate capability in comparison to the all-solid secondary batteries of Comparative Examples 1 and 2.

It was considered that this result is due to the fact that because the all-solid secondary batteries of Examples 1 to 3 each include a composite anode active material, the composite anode active material includes a graphene matrix, and the graphene matrix has flexibility, volume changes of the first anode active material layer due to plating and/or dissolution of lithium during charging and discharging were more easily accommodated. It was considered that improved uniformity of electrode reactions in the all-solid secondary batteries of Examples 1 to 3, by virtue of substantially uniform distribution of the metal oxides in the anode active material layers, contributed to the same result.

The all-solid secondary batteries of Examples 4 to 6 each showed improved high-rate capability, compared to the all-solid secondary battery of Comparative Example 3.

It was considered that this result is due to the fact that because the all-solid secondary batteries of Examples 4 to 6 each include a composite anode active material, the composite anode active material includes a graphene matrix, and the graphene matrix has flexibility, volume changes of the first anode active material layer due to plating and/or dissolution of lithium during charging and discharging were more easily accommodated. It was considered that improved uniformity of electrode reactions in the all-solid secondary batteries of Examples 4 to 6, by virtue of substantially uniform distribution of the metal oxides in the anode active material layers, contributed to the same result. In the all-solid secondary batteries of Reference Examples 1 and 2, an energy density of the all-solid secondary batteries were decreased due to an addition of thick elastic sheet.

According to one aspect, an all-solid secondary battery, that has reduced volume changes during charging and discharging and improved cycling performance by including a novel composite anode active material, may be provided.

In present disclosure, "not include a or any 'component‴, "exclude a or any 'component‴, ‴component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

The present invention may be defined by reference to the following clauses:
Clause 1. An all-solid secondary battery comprising:
   a cathode layer;
   an anode layer; and
   a solid electrolyte layer between the cathode layer and the anode layer,

   wherein the cathode layer comprises a cathode current collector and a cathode active material layer on one surface of the cathode current collector, and
   the anode layer comprises an anode current collector and a first anode active material layer on one surface of the anode current collector,
   wherein the first anode active material layer comprises a composite anode active material,
   wherein the composite anode active material comprises a first metal oxide represented by MₐO_{b} (0<a≤3 and 0<b<4, wherein if a is 1, 2, or 3, b is not an integer), and a carbon-based material,
   wherein the first metal oxide is disposed within a matrix of the carbon-based material, and M is one or more metals selected from Groups 2 to 12 and Groups 14 to 16 of the Periodic Table of the Elements.
Clause 2. The all-solid secondary battery of clause 1, wherein the first metal oxide comprises a metal, and the metal is one or more selected from Si, Nb, Mg, Sc, Ti, Zr, V, W, Mn, Fe, Co, Pd, Cu, Ag, Zn, Sb, and Se.
Clause 3. The all-solid secondary battery of clause 1 or clause 2, wherein the first metal oxide is one or more selected from SiO_{y} (0<y<2), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), CO₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2).
Clause 4. The all-solid secondary battery of clauses 1 to 3, wherein the composite anode active material further comprises a second metal oxide represented by MₐO_{c} (0<a≤3 and 0<c≤4, wherein if a is 1, 2, or 3, c is an integer),
   wherein the second metal oxide comprises the same metal as the first metal oxide, and
   a ratio c/a of c to a in the second metal oxide has a larger value than a ratio b/a of b to a in the first metal oxide.
Clause 5. The all-solid secondary battery of clauses 1 to 4, wherein the second metal oxide is one or more selected from SiO₂, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂.
Clause 6. The all-solid secondary battery of clauses 1 to 5, wherein the first metal oxide is a product of reduction of the second metal oxide.
Clause 7. The all-solid secondary battery of clauses 1 to 6, wherein at least one selected from the first metal oxide and the second metal oxide has an average particle diameter of about 1 nm to about 1 µm.
Clause 8. The all-solid secondary battery of clauses 1 to 7, wherein a content of at least one of the first metal oxide and the second metal oxide is about 10 wt% to about 90 wt% with respect to a total weight of the composite anode active material.
Clause 9. The all-solid secondary battery of clauses 1 to 8, wherein the carbon-based material comprises a carbon-based nanostructure,
   wherein the carbon-based nanostructure comprises a two-dimensional carbon-based nanostructure,
   wherein the two-dimensional carbon-based nanostructure comprises graphene.
Clause 10. The all-solid secondary battery of clauses 1 to 9, wherein the carbon-based material has a branched structure, wherein the first metal oxide is distributed within the branched structure, and
   the branched structure comprises a plurality of graphene particles in contact with one another.
Clause 11. The all-solid secondary battery of clauses 1 to 10, wherein the composite anode active material has a particulate form, and an average particle diameter of the composite anode active material is 4 µm or less.
Clause 12. The all-solid secondary battery of clauses 1 to 11, wherein the first anode active material layer further comprises a carbon-based anode active material, and
   the carbon-based anode active material comprises amorphous carbon, crystalline carbon, porous carbon, or a combination thereof.
Clause 13. The all-solid secondary battery of clauses 1 to 12, wherein the first anode active material layer further comprises a binder, the binder comprising a fluorinated binder.
Clause 14. The all-solid secondary battery of clauses 1 to 13, wherein an initial charge capacity of the first anode active material layer is less than an initial charge capacity of the cathode active material layer, and
   the all-solid secondary battery further comprises a second anode active material layer disposed at least one of: between the anode current collector and the first anode active material layer; and between the anode current collector and an electrolyte layer,
   wherein the second anode active material layer is a metal layer, the metal layer comprising lithium or a lithium alloy, and
   a thickness of the second anode active material layer is less than a thickness of the first anode active material layer.
Clause 15. The all-solid secondary battery of clauses 1 to 14, wherein the cathode active material layer comprises a cathode active material,
   wherein the cathode active material comprises a sulfide-based cathode active material, an oxide-based cathode active material, or a combination thereof,
   wherein the sulfide-based cathode active material comprises nickel sulfide, copper sulfide, Li₂S, a Li₂S-containing composite, or a combination thereof, and
   the oxide-based cathode active material comprises a lithium transition metal oxide, a metal oxide, or a combination thereof, wherein the lithium transition metal oxide comprises a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof, and the metal oxide comprises an iron oxide, a vanadium oxide, or a combination thereof.
Clause 16. The all-solid secondary battery of clauses 1 to 15, wherein the cathode active material layer further comprises one or more selected from a solid electrolyte, a conductive material, and a binder,
   wherein the solid electrolyte comprises a sulfide-based solid electrolyte, and the conductive material comprises a carbon-based conductive material.
Clause 17. The all-solid secondary battery of clauses 1 to 16, wherein the solid electrolyte layer comprises a solid electrolyte or a combination of a solid electrolyte and a gel electrolyte, and
   the solid electrolyte comprises a sulfide-based solid electrolyte, an oxide-based solid electrolyte, a polymer solid electrolyte, or a combination thereof, and
   the gel electrolyte comprises a polymer gel electrolyte.
Clause 18. The all-solid secondary battery of clauses 1 to 17, wherein the sulfide-based solid electrolyte is at least one selected from Li₂S-P₂S₅ and Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-Lil, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga, Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2, and
   the sulfide-based solid electrolyte comprises an argyrodite-type solid electrolyte,
   wherein the argyrodite-type solid electrolyte comprises one or more selected from Li₆PS₅Cl, Li₆PS₅Br, and LisPSsl, and
   the argyrodite-type solid electrolyte has a density of about 1.5 g/cc to about 2.0 g/cc.
Clause 19. The all-solid secondary battery of clauses 1 to 18, wherein at least one of the cathode current collector and the anode current collector comprises a base film and a metal layer disposed on one surface or opposite surfaces of the base film,
   wherein the base film comprises a polymer, the polymer comprising polyethylene terephthalate (PET), polyethylene (PE), polypropylene (PP), polybutylene terephthalate (PBT), polyimide (PI), or a combination thereof, and
   the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
Clause 20. The all-solid secondary battery of clauses 1 to 19, further comprising a first inactive member disposed on at least one of the opposite surface to the one surface of the cathode current collector and the opposite surface to the one surface of the anode current collector,
   wherein the first inactive member is an elastic member.

## Claims

1. An all-solid secondary battery (1) comprising:
a cathode layer (10);
an anode layer (20); and
a solid electrolyte layer (30) between the cathode layer (10) and the anode layer (20),
wherein the cathode layer (10) comprises a cathode current collector (11) and a cathode active material layer (12) on a surface of the cathode current collector (11), and
the anode layer (20) comprises an anode current collector (21) and a first anode active material layer (22) on a surface of the anode current collector (21),
wherein the first anode active material layer (22) comprises a composite anode active material,
wherein the composite anode active material comprises a first metal oxide represented by MₐO_{b} (0<a≤3 and 0<b<4, wherein if a is 1, 2, or 3, b is not an integer), and a carbon-based material,
wherein the first metal oxide is within a matrix of the carbon-based material, and M is one or more metals selected from among metals in Groups 2 to 12 and Groups 14 to 16 of the Periodic Table of the Elements.

2. The all-solid secondary battery (1) as claimed in claim 1, wherein the first metal oxide comprises a metal, and the metal is one or more selected from among Si, Nb, Mg, Sc, Ti, Zr, V, W, Mn, Fe, Co, Pd, Cu, Ag, Zn, Sb, and Se, preferably the first metal oxide is one or more selected from among SiO_{y} (0<y<2), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), CO₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2).

3. The all-solid secondary battery (1) as claimed in claim 1 or 2, wherein the composite anode active material further comprises a second metal oxide represented by MₐO_{c} (0<a≤3 and 0<c≤4, wherein if a is 1, 2, or 3, c is an integer),
wherein the second metal oxide and the first metal oxide comprise a same metal, and
a ratio c/a of c to a in the second metal oxide has a larger value than a ratio b/a of b to a in the first metal oxide; preferably the second metal oxide is one or more selected from among SiO₂, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂.

4. The all-solid secondary battery (1) as claimed in any of the claims 1 to 3, wherein the first metal oxide is a product of reduction of the second metal oxide.

5. The all-solid secondary battery (1) as claimed in any of the claims 1 to 4, wherein at least one selected from among the first metal oxide and the second metal oxide is in a form of particles and the particles has an average particle diameter of about 1 nm to about 1 µm.

6. The all-solid secondary battery (1) as claimed in any of the claims 1 to 5, wherein a content of at least one of the first metal oxide or the second metal oxide is about 10 wt% to about 90 wt% with respect to a total weight of the composite anode active material.

7. The all-solid secondary battery (1) as claimed in any of the claims 1 to 6, wherein the carbon-based material comprises a carbon-based nanostructure,
wherein the carbon-based nanostructure comprises a two-dimensional carbon-based nanostructure, and
wherein the two-dimensional carbon-based nanostructure comprises graphene.

8. The all-solid secondary battery (1) as claimed in any of the claims 1 to 6, wherein the carbon-based material has a branched structure, and
wherein the first metal oxide is distributed within the branched structure, and
the branched structure comprises a plurality of graphene particles in contact with one another.

9. The all-solid secondary battery (1) as claimed in any of the claims 1 to 8, wherein the composite anode active material is in a form of particles, and an average particle diameter of the particles of the composite anode active material is about 4 µm or less.

10. The all-solid secondary battery (1) as claimed in any of the claims 1 to 9, wherein the first anode active material layer (22) further comprises a carbon-based anode active material, and
the carbon-based anode active material comprises amorphous carbon, crystalline carbon, porous carbon, or a combination thereo; and/or the first anode active material layer (22) further comprises a binder, the binder comprising a fluorinated binder.

11. The all-solid secondary battery (1) as claimed in any of the claims 1 to 10, wherein an initial charge capacity of the first anode active material layer (22) is less than an initial charge capacity of the cathode active material layer (12), and
the all-solid secondary battery (1) further comprises a second anode active material layer (24), the second anode active material layer (24) being interposed at at least one of: between the anode current collector (21) and the first anode active material layer (22), or between the anode current collector (21) and an electrolyte layer,
wherein the second anode active material layer (24) is a metal layer, the metal layer comprising lithium or a lithium alloy, and
a thickness of the second anode active material layer (24) is less than a thickness of the first anode active material layer (22).

12. The all-solid secondary battery (1) as claimed in any of the claims 1 to 11, wherein the cathode active material layer (12) comprises a cathode active material,
wherein the cathode active material comprises a sulfide-based cathode active material, an oxide-based cathode active material, or a combination thereof, and
wherein the sulfide-based cathode active material comprises nickel sulfide, copper sulfide, Li₂S, a Li₂S-containing composite, or a combination thereof,
the oxide-based cathode active material comprises a lithium transition metal oxide, a metal oxide, or a combination thereof, wherein the lithium transition metal oxide comprises a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof, and
the metal oxide comprises an iron oxide, a vanadium oxide, or a combination thereof; and/or the cathode active material layer (12) further comprises one or more selected from among a solid electrolyte, a conductive material, and a binder, and
Wherein the solid electrolyte comprises a sulfide-based solid electrolyte, and
the conductive material comprises a carbon-based conductive material.

13. The all-solid secondary battery (1) as claimed in any of the claims 1 to 12, wherein the solid electrolyte layer (30) comprises a solid electrolyte or a combination of a solid electrolyte and a gel electrolyte, and
the solid electrolyte comprises a sulfide-based solid electrolyte, an oxide-based solid electrolyte, a polymer solid electrolyte, or a combination thereof, whereby preferably the sulfide-based solid electrolyte is at least one selected from among
Li₂S-P₂S₅, Li₂S-P₂S₅-LiX, X being a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, m and n each being a positive number and Z being Ge, Zn or Ga, Li₂S-GeS₂, Li₂S-SiS₂-Li₃PO₄, Li₂S-SiS₂-LiₚMO_{q}, p and q each being a positive number and M being P, Si, Ge, B, Al, Ga or In, Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (0≤x≤2), and
the sulfide-based solid electrolyte comprises an argyrodite-type solid electrolyte,
wherein the argyrodite-type solid electrolyte comprises one or more selected from among Li₆PS₅Cl, Li₆PS₅Br, and LisPSsl, and
the argyrodite-type solid electrolyte has a density of about 1.5 g/cc to about 2.0 g/cc.
and
the gel electrolyte comprises a polymer gel electrolyte.

14. The all-solid secondary battery (1) as claimed in any of the claims 1 to 13, wherein at least one of the cathode current collector (11) or the anode current collector (21) comprises a base film and a metal layer on one surface or opposite surfaces of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. The all-solid secondary battery (1) as claimed in any of the claims 1 to 14, further comprising a first inactive member on at least one of the opposite surface to the surface of the cathode current collector (11) or the opposite surface to the surface of the anode current collector (21),
wherein the first inactive member is an elastic member.
